(19) 

**Europäisches Patentamt**
**European Patent Office**
**Office européen des brevets**

(11) **EP 2 755 182 A1**

(12) **EUROPEAN PATENT APPLICATION**
published in accordance with Art. 153(4) EPC

(43) Date of publication:
**16.07.2014 Bulletin 2014/29**

(21) Application number: **12830176.9**

(22) Date of filing: **07.09.2012**

(51) Int Cl.:
*G06Q 40/04* (2012.01)       *G06Q 90/00* (2006.01)

(86) International application number:
**PCT/JP2012/005697**

(87) International publication number:
**WO 2013/035344 (14.03.2013 Gazette 2013/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.09.2011   JP 2011196512**
**07.03.2012   JP 2012050819**

(71) Applicant: **Tokyo Institute of Technology
Tokyo 152-8500 (JP)**

(72) Inventors:
• **TAKAYASU, Misako**
  **Tokyo 152-8550 (JP)**
• **YURA, Yoshihiro**
  **Tokyo 152-8550 (JP)**
• **NAKAMURA, Kazuyuki**
  **Kawasaki-shi**
  **Kanagawa 214-8571 (JP)**

(74) Representative: **Regimbeau**
  **20, rue de Chazelles**
  **75847 Paris Cedex 17 (FR)**

(54) **METHOD AND PROGRAM FOR DETECTING CHANGE-POINT OF TIME SERIES DATA, AND METHOD AND PROGRAM FOR PREDICTING PROBABILITY DENSITY DISTRIBUTION OF FUTURE TIME-SERIES DATA VALUES**

(57)     The present invention applies a particle filter method to the PUCK model for calculating a true market price $P(t+1)$ at the time $(t)$ determined by the true market price $P(t)$ and a core price $PM(t)$. First, a probability density function of a parameter is obtained by generating a group of particles having parameters representing the state of the PUCK model each having different values. Then, the degree of conformity of each of the particles is evaluated and the particles are resampled as follows in accordance with the degree of conformity. A random number is generated and the random number is compared with a predetermined value, where particles are regenerated in accordance with probability density function such as a normal distribution for making a parameter value of the model at time $(t)$ into a mean value when the random number is greater than the predetermined value, and where the particles are regenerated taking a uniform distribution as the probability density function when the random number is less than the predetermined value. This series of operations is continuous.

Fig. 1

**Description**

**Technical Field**

The present invention relates to a method and a program for detecting a change-point of time-series data, and a method and a program for predicting a probability density distribution of future time-series data values.

**Background Art**

Various forms of time-series data are used today in a variety of fields. For example, fluctuations in foreign exchange are used in international finance and stock prices and the like are used in securities trading as time-series data. In addition, the management or the like of yield ratio trends is performed in, for example, semiconductor manufacturing and other manufacturing industries.

Such time-series data are generally used to detect a change-point in a trend and to take action and countermeasures in accordance with the change. For example, in transactions in yen/dollar currency exchange, there is a need to detect trends in price movements, in particular the point at which a trend has a major change, to appropriately correct trade policies. With such time-series data, the estimation of long-term trends is done using the moving average of past time-series data. A familiar example is yen/dollar trading, where exchange charts display moving averages over a 25-day period, a 13-week period, or the like. A technique for applying a random walk focusing on the moving average is broadly used in analyzing long-term trends of such time-series data.

However, in currency trading and the like, there are some cases where sharp price movements over the short term due to the occurrence of an event such as when there is a concentration of buy orders or sell orders linked to price movements. In such a case, it is difficult to detect such steep changes in trend with only a random walk that focuses merely on the moving average of past data. In other words, a moving average being an average for plural past data, it is therefore impossible, when there is less of the most recent data compared to the parent set, to perceive steep changes in trends, even when applying a random walk and even though the most recent data shows a major fluctuation.

To solve the problem described above, the present inventors have proposed the Potentials of Unbalanced Complex Kinetics (PUCK) model for detecting steep changes in time-series data (Non-patent Document 1). In the PUCK model, changes in time-series data in finance or other fields can be represented by the following Equation (1) with three elements: the true market value $P(t)$ at a time $(t)$ (the "noise-reduced price"), the observation error of the market price $f_Y(t)$ at the time $(t)$ (the "observation noise"), and the observed market price $Y(t)$ at time $(t)$ ("best-bid," "best-ask," "mid-quote data," and the like).
[Equation 1]

$$Y(t) = P(t) + f_Y(t) \qquad \cdots \qquad (1)$$

A "tick" refers to an event where a trading market experiences a fluctuation in the price of a good to be traded due to a contract being approved. Accordingly, a single-tick period signifies the time interval between the timing of a contract at a certain point in time and the timing of the preceding contract. The number of ticks signifies the number of contracts approved within a certain time period, i.e., the number of events that occur resulting in a fluctuation in the price of the good to be traded. Below, "$(t)$" represents a point in time when counts by the number of ticks, or represents real-time. The PUCK model deals in fluctuations of the true market price $P(t)$ after the reverse correlation of the displacement of the scale of the number of ticks has been removed. A fluctuation in the true market price during a single tick can be represented by the following Equation (2).
[Equation 2]

$$P(t+1) - P(t) = -\frac{b(t)}{M-1}\left(P(t) - P_M(t)\right) + f_P(t) \qquad \cdots \qquad (2)$$

where the first term on the right-hand side of the Equation (2) represents the degree of contribution of the potential acting on a fluctuation in the true market price during a single tick, and $f_P(t)$ in the second term on the right-hand side of the Equation (2) represents a fluctuation error causing the true market price at time $(t)$ to fluctuate. Further, $b(t)$ is a potential coefficient at time $(t)$, $M$ is the number of most recent data needed to estimate the core of the price fluctuation, and $P_M(t)$

is a core price of the price fluctuation estimated using the number M of most recent true market prices. The potential coefficient b(t) at time(t) in the Equation (2) is empirically known to have a dependency relative to the number M of most recent data, and decreases in proportion to {1/(M-1)}. Accordingly, in the Equation (2), the potential coefficient b(t) at time (t) is multiplied by {1/(M-1)}, to avoid the dependency of the potential coefficient b(t) at time (t) on the number M of most recent data.

The core price $P_M(t)$ is represented by the following Equation (3).

[Equation 3]

$$P_M(t) = \frac{1}{M} \sum_{h=0}^{M-1} P(t-h) \qquad \cdots \quad (3)$$

When the Equation (2) is considered to be a random walk in a field where a linear central force that changes at each moment is working, the potential coefficient b(t) at time (t) is perceived as a secondary and higher-order potential coefficient, and a potential W(q, t) on the degree of contribution of the potential represented by the first term on the right-hand side of the Equation (2) can be expressed by the following Equation (4).

[Equation 4]

$$W(q,t) = \sum_{i=2}^{K} \frac{b_i(t)}{i} q^i \qquad (K \geq 2) \qquad \cdots \quad (4)$$

where i is the order of the potential.

The absolute value of the average rate of the price fluctuation is proportional to the magnitude of the slope of the tangent of the potential function. The expected direction of the price fluctuation is the direction down the slope. Thus, to understand where on the potential function the current market price is, it is necessary to calculate the divergence of the core price and the true market price and to understand where on the potential function the market price is.

Further, when the Equation (4) is used, the Equation (2) can be rewritten with the following Equation (5).

[Equation 5]

$$P(t+1) - P(t) = -\frac{d}{dq} W(q,t) \Big|_{q = \frac{P(t) - P_M(t)}{M-1}} + f_P(t) \qquad \cdots \quad (5)$$

As described above, the degree of contribution of the potential W(q, t) in the Equations (4) and (5) is determined by the value of the potential coefficient $b_i(t)$ at time (t). For example, when, at time (t), the potential coefficient $b_i(t) = 0$ in each order at time (t), then P(t+1) - P(t) = $f_P(t)$, and only the fluctuation error component contributes to the price difference. On the other hand, as the absolute value of the potential coefficient $b_i(t)$ in each order at time (t) increases, the contribution of the potential W(q, t) increases. As a result, it is known that a diffusion that is faster or slower than a coefficient of diffusion calculated by the random walk model can be quantitatively estimated as a function of the potential coefficient $b_i(t)$ in each order at time (t) (below, this is also referred to as an anomalous diffusion). In particular, when the secondary potential coefficient $b_2(t) \leq -2$, the fluctuation of the market price is known to have already deviated and spread from the moving average of the past data.

The PUCK model is in this manner capable of expressing a short-term anomalous diffusion as described above by considering the secondary and higher-order potential term. It is thereby possible to detect an anomalous diffusion, such detection being unattainable by past techniques using only a random walk.

**Citation List**

**Non Patent Literature**

[Non-patent Document 1] Misako Takayasu et. al., "Econophysics Approaches to Large-Scale Business Data and Financial Crisis," Springer Japan, June 2010, pp. 79-98.

[Non-patent Document 2] Kenta Yamada, Hideki Takayasu, Takatoshi Ito and Misako Takayasu, "Solvable Stochastic Dealer Model for Financial Markets," Physical Review E,79, Issue 5, 051120 (2009).

[Non-patent Document 3] Kazuyuki Nakamura and Tomoyuki Higuchi, "Recent Advances and Applications of Bayesian Theory [II]: Sequential Bayesian Estimation and Data Assimilation," The Journal of the Institute of Electronics, Information, and Communication Engineers, Vol. 92, No. 12, pp. 1062-1067 (2009).

## Summary of Invention

### Technical Problem

However, the present inventors have found that the above-described technique for using the PUCK model has the following problems. In today's financial markets and the like, with the introduction of high-speed automated trading using computer systems and the like, there is a need to quickly and accurately detect time-series data fluctuation indicating pricing. However, in an ordinary PUCK model, estimating the potential coefficient $b_i(t)$ in each order at time (t) requires that data for about 1,000 ticks be used to plot the values $\{P(t+1) - P(t)\}$ and $\{P(t) - P_M(t)\}$ of the Equation (2) and derive a slope in scatter plot thereof using the least-square method or the like to calculate the potential coefficient b(t) at time (t) (hereinafter, a set of the potential coefficients $b_i(t)$ ($2 \leq i \leq K$) in the respective orders is simply referred to as the potential coefficient $b_i(t)$ unless otherwise noted). For this reason, until time-series data for about 1,000 is collected after data sampling has begun, there is not yet enough, in practical use, to be able to track steep changes in trends without substituting past information.

Also, on the model, although the value of the potential coefficient b(t) at time (t) should not depend on the number M of most recent data, it is not possible to ignore the effect by which the appropriate range of the number M of most recent data for satisfying the Equation (2) changes from observation varies for each time period, and the estimation of the potential coefficient b(t) at time (t) has a large error, which is problematic. In light of this, it is a critical task to sequentially search for a number M of most recent data that is optimal for fitting the PUCK model.

Further, in order to estimate the optimal true price P(t) at time (t), it has been necessary to use all the data from approximately each day to separately update the calculation for the weight of the approximately optimal moving average of a few number of ticks.

The present invention has been made in light of the aforementioned situation, and it is an object of the present invention to provide a method and a program for detecting a change-point of time-series data, and a method and a program for predicting a probability density distribution of future time-series data values.

### Solution to Problem

A first aspect of the present invention is a method for detecting a change-point in time-series data, applying a particle filter method to a PUCK model for calculating a true market price P(t) at a time (t) by the sum of a potential term and fluctuation error defined by the true market price at a time (t-1) and a core price, which is the moving average of a number M (where M is a positive integer) of true market prices until the time (t-1), comprising: a first step for obtaining a probability density function for parameters of a later time than a group of particles having parameters representing the state of the PUCK model each having different values; a second step for evaluating the degree of conformity of the true market price at the time (t) relative to the market price observed at the time (t) for each of plural particles; and a third step for resampling particles from the plural particles in accordance with the degree of conformity, wherein, in the third step, a random number is generated, and the random number is compared with a first predetermined value, wherein a probability density function comprising a probability density distribution where the parameters representing the state of the PUCK model at the time (t) are average values is generated as particles when the random number is greater than the first predetermined value, and a probability density function comprising a uniform distribution is generated as particles when the random number is less than the first predetermined value. Thereby, it is possible to detect a change-point by calculating the potential coefficient, which gives favorable trackability, and detecting changes in the potential coefficient, even when the market price, which is the time-series data, experiences a steep change in the trend.

A second aspect of the present invention is the method for detecting a change-point in time-series data, wherein the probability density distribution where the parameters representing the state of the PUCK model at the time (t) are average values is a normal distribution where the parameters representing the state of the PUCK model at the time (t) are average values. Thereby, it is possible to generate the probability density distribution precisely using the normal distribution.

A third aspect of the present invention is the method for detecting a change-point in time-series data, wherein the true market price at the time (t+1) is calculated by adding the potential term based on the PUCK model and a fluctuation error of the true market price at the time (t). Thereby, it is possible to appropriately resample using the particle filter method.

A fourth aspect of the present invention is the method for detecting a change-point in time-series data, wherein, in the third step, a random number is generated for each of the particles, and the random number is compared with the first predetermined value, where a conditional probability density function for assuming M at the time (t) is generated as particles when the random number is greater than the first predetermined value, and a probability density function comprising a uniform distribution is generated as particles when the random number is less than the first predetermined value. Thereby, it is possible to simultaneously apply the advancement of time not only to the potential coefficient but also to M, which indicates the number of most recent time-series data, seen from the time (t).

A fifth aspect of the present invention is the method for detecting a change-point in time-series data, wherein the true market price at the time (t+1) is calculated by adding the potential term and a fluctuation error of the true market price at the time (t). Thereby, it is possible to precisely estimate the true market price at the time (t).

A sixth aspect of the present invention is the method for detecting a change-point in time-series data, wherein the market price observed at the time (t) is the sum of the true market price at the time (t) and the observation error of the market price at the time (t). Thereby, it is possible to precisely estimate the degree of conformity of the true market price at the time (t) relative to the observed market price at the time (t).

A seventh aspect of the present invention is the method for detecting a change-point in time-series data, wherein the fluctuation error of the true market price at the time (t) and the observation error of the market price at the time (t) are given by a probability density function in accordance with a normal distribution or the like. Thereby, it is possible to precisely estimate the true market price at the time (t) and the degree of conformity of the true market price at the time (t) relative to the observed market price at the time (t).

An eighth aspect of the present invention is a method for predicting a probability density distribution of future time-series data values that calculates a true market price P(t) at the time (t) at a time (t+N) by time advancement of the true market price P(t) at the time (t) based on a potential coefficient of the potential term at the time (t) calculated by the method for detecting a change-point in time-series data according to one of Claims 1 to 7, the value of M and a fluctuation error of the true market price at the time (t). Thereby, it is possible to predict the probability density distribution of future time-series data values using the PUCK model.

A ninth aspect of the present invention is the method for predicting a probability density distribution of future time-series data values, wherein when a total number of particles is Np, a number specifying the particle is j (where j is an integer satisfying $1 \leq j \leq Np$), a potential coefficient of the particle with the number j at the time (t) is $b^{(j)}_i(t)$ (where i is an integer of 2 or more indicating an order of a potential), a fluctuation error of the true market price of the particle with the number j at the time (t) is $f^{(j)}_P(t)$, the true market price of the particle with the number j at the time (t) is $P^{(j)}(t)$, the true market price of the particle with the number j at the time (t+N) is $P^{(j)}(t+N)$, a core price of the market price of the particle with the number j at the time (t) is $P^{(j)}_M(t)$, and the value of M at the time (t) is M(t), the true market price $P^{(j)}(t+N)$ of the particle with the number j at the time (t+N) is represented by Expression:

[Equation 6]

$$P^{(j)}(t+N) = P^{(j)}(t) - \sum_{n=0}^{N-1}\left\{\sum_{i=2}^{K}\left\{b^{(j)}_i(t)\left(\frac{P^{(j)}(t+n)-P^{(j)}_M(t+n)}{M^{(j)}(t)-1}\right)^{i-1}\right\}+f^{(j)}_P(t)\right\}$$

where K is an integer of 2 or more. Thereby, it is possible to precisely predict the probability density distribution of future time-series data values using the PUCK model.

A tenth aspect of the present invention is the method for predicting a probability density distribution of future time-series data values, wherein a potential coefficient $b^{(j)}_i(t+1)$ of the particle with the number j at a time (t+1) is calculated by advancement of time of the potential coefficient $b^{(j)}_i(t)$ of the particle with the number j at the time (t). Thereby, it is possible to precisely predict the probability density distribution of future time-series data values using the PUCK model.

An eleventh aspect of the present invention is a program for detecting a change-point in time series data, in which a computer is used to execute the detection of a change-point in time-series data in which a particle filter method is applied to a PUCK model for calculating a true market price P(t) at a time (t) by the sum of a potential term and fluctuation error defined by the true market price at a time (t-1) and a core price, which is the moving average of a number M (where M is a positive integer) of true market prices until the time (t-1), wherein a computer is used to execute a first processing for obtaining a probability density function of a parameter by generating a group of particles having parameters representing the state of the PUCK model each having different values, a second processing for evaluating the degree of conformity of the true market price at the time (t) relative to the market price observed at time (t) for each of plural particles in a degree of conformity evaluation unit, and a third processing for resampling particles from the plural particles in accordance with the degree of conformity in a sampling unit, wherein processing for regenerating a probability density function comprising a probability density distribution where the parameter representing the state of the PUCK model at the time (t) is a mean value as particles is executed when the random number is greater than the first predetermined value, and processing for generating particles in accordance with a uniform distribution is executed when the random number is less than the first predetermined value are executed. Thereby, it is possible to detect a change-point by calculating the potential coefficient, which gives favorable trackability, and detecting changes in the potential coefficient, even when the market price, which is the time-series data, experiences a steep change in the trend.

A twelfth aspect of the present invention is the program for detecting a change-point in time series data, wherein the probability density distribution where the parameters representing the state of the PUCK model at the time (t) are average values is a normal distribution where the parameters representing the state of the PUCK model at the time (t) are average values. Thereby, it is possible to generate the probability density distribution precisely using the normal distribution.

A thirteenth aspect of the present invention is the program for detecting a change-point in time-series data, wherein in the third step, not only are particles sampled more when having a greater degree of conformity, but also feasible particles having a low degree of conformity are also generated at a constant proportion. Thereby, it is possible to appropriately resample using the particle filter method.

A fourteenth aspect of the present invention is the program for detecting a change-point in time-series data, wherein in the first step, processing for generating a random number, processing for generating a conditional probability density function assuming a parameter of the PUCK model at the time (t) as particles, and processing for generating a probability density function comprising a uniform distribution as particles when the random number is less than the third predetermined value are executed. Thereby, it is possible to simultaneously apply the advancement of time not only to the potential coefficient but also to M, which indicates the amount of most recent time-series data, seen from the time (t).

A fifteenth aspect of the present invention is the program for detecting a change-point in time-series data, wherein in the program for detecting the change-point in the time-series data, the true market price at the time (t) is calculated by adding the potential term and the fluctuation error of the true market price at the time (t). Thereby, it is possible to precisely estimate the degree of conformity of the true market price at the time (t) relative to the observed market price at the time (t).

An sixteenth aspect of the present invention is the program for detecting a change-point in time-series data, wherein in the program for detecting the change-point in the time-series data, the market price observed at the time (t) is the sum of the true market price at the time (t) and the observation error of the market price at the time (t). Thereby, it is possible to precisely estimate the degree of conformity of the true market price at the time (t) relative to the observed market price at the time (t).

A seventeenth aspect of the present invention is the program for detecting a change-point in time-series data, wherein the fluctuation error of the true market price at the time (t) and the observation error of the market price at the time (t) are given by a probability density function in accordance with a normal distribution or the like. Thereby, it is possible to precisely estimate the true market price at the time (t) and the degree of conformity of the true market price at the time (t) relative to the observed market price at the time (t).

An eighteenth aspect of the present invention is a program for predicting a probability density distribution of future time-series data values, wherein a true market price P(t) at the time (t) at a time (t+N) is calculated by time advancement of the true market price P(t) at the time (t) based on a potential coefficient of the potential term at the time (t) calculated by the program for detecting a change-point in time-series data according to one of Claims 11 to 17, the value of M and a fluctuation error of the true market price at the time (t). Thereby, it is possible to predict the probability density distribution of future time-series data values using the PUCK model.

An nineteenth aspect of the present invention is the program for predicting a probability density distribution of future time-series data values, wherein when a total number of particles is Np, a number specifying the particle is j (where j is an integer satisfying $1 \leq j \leq Np$), a potential coefficient of the particle with the number j at the time (t) is $b^{(j)}_i(t)$ (where i is an integer of 2 or more indicating an order of a potential), a fluctuation error of the true market price of the particle with the number j at the time (t) is $f^{(j)}_P(t)$, the true market price of the particle with the number j at the time (t) is $P^{(j)}(t)$, the true market price of the particle with the number j at the time (t+N) is $P^{(j)}(t+N)$, a core price of the market price of the particle with the number j at the time (t) is $P^{(j)}_M(t)$, and the value of M at the time (t) is M(t), the true market price $P^{(j)}(t+N)$ of the particle with the number j at the time (t+N) is represented by Expression:

[Equation 7]

$$P^{(j)}(t+N) = P^{(j)}(t) - \sum_{n=0}^{N-1}\left\{ \sum_{i=2}^{K}\left\{ b^{(j)}_{\ i}(t)\left( \frac{P^{(j)}(t+n) - P^{(j)}_M(t+n)}{M^{(j)}(t)-1} \right)^{i-1} \right\} + f^{(j)}P(t) \right\}$$

where K is an integer of 2 or more. Thereby, it is possible to precisely predict the probability density distribution of future time-series data values using the PUCK model.

A twentieth aspect of the present invention is the program for predicting a probability density distribution of future time-series data values, wherein a potential coefficient $b^{(j)}_i(t+1)$ of the particle with the number j at a time (t+1) is calculated by advancement of time of the potential coefficient $b^{(j)}_i(t)$ of the particle with the number j at the time (t).

**Advantageous Effects of Invention**

According to the present invention, it is possible to provide a method and a program for detecting a change-point of time-series data, and a method and a program for predicting a probability density distribution of future time-series data values that are capable of precisely detecting steep changes in the time-series data.

**Brief Description of Drawings**

FIG. 1 is a flow chart illustrating the sequence of a particle filter method used in a first embodiment.

FIG. 2 is a graph illustrating a probability distribution given by Equation (24) according to the first embodiment.

FIG. 3 is a graph illustrating a probability distribution given by Equation (25) according to the first embodiment.

FIG. 4 is a flow chart illustrating a method for determining the potential coefficient b(t) at time (t) in the first embodiment.

FIG. 5 is a flow chart illustrating a method for determining the number M(t) of most recent data at time (t) in the first embodiment.

FIG. 6 is a block diagram illustrating a schematic view of the configuration of a time-series data change-point detection device 200 for executing a program for detecting a time-series data change-point according to a second embodiment.

FIG. 7 is a flow chart illustrating a method for the advancement of time of a PUCK model to which a particle filter method is applied according to the third embodiment.

FIG. 8 is a graph illustrating the progression of a probability density distribution when calculating the probability density distribution of the market price at time (t+N) by a method for predicting a probability density distribution of values of future time-series data according to the third embodiment.

FIG. 9 is a graph illustrating a probability density distribution of values of the market price at time (t+N) by a method for predicting a probability density distribution of values of future time-series data according to the third embodiment.

FIG. 10 is a block diagram illustrating a schematic view of the configuration of a prediction device 400 for predicting a probability density distribution of values of future time-series data in which a program for predicting a probability density distribution of values of future time-series data according to the fourth embodiment is executed,

FIG. 11 is a flow chart illustrating a method for the advancement of time of a PUCK model to which a particle filter method is applied according to the fifth embodiment.

FIG. 12 is a graph illustrating the progression of the market price for each particle as a result of substituting the current market price into a mathematical model and advancing time by each particle number j.

FIG. 13 is a block diagram illustrating a schematic view of the configuration of a prediction device 600 for predicting a probability density distribution of values of future time-series data in which a program for predicting a probability density distribution of values of future time-series data according to the sixth embodiment is executed.

**Description of Embodiments**

The following is a description of the embodiments of the present invention, with reference to the accompanying drawings. In each of the drawings, same elements are denoted by the same reference numerals, and a repeated description has been omitted when needed.

First Embodiment

A description of the method for detecting a change-point of time-series data according to a first embodiment of the present invention will now be provided. The method for detecting a change-point of time series data in this embodiment applies a so-called particle filter method (Non-patent Document 3) to the above-described PUCK model. The application of the particle filter method makes it possible to sequentially predict the values at time (t) of the potential coefficient b(t) and the number M(t) of most recent data.

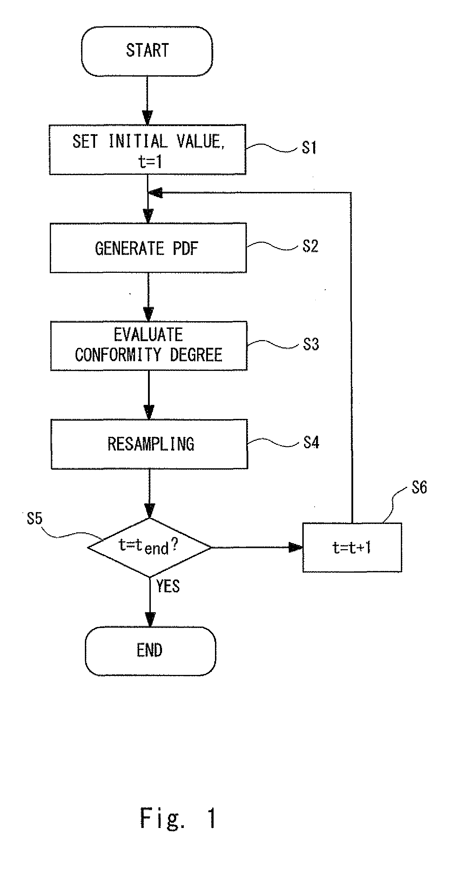

An overview of the particle filter method will be described first. FIG. 1 is a flow chart illustrating the sequence of the particle filter method used in the first embodiment. In the particle filter method, which is one type of a sequential Monte Carlo method, a state vector $x_t$ is given by the following Equation (6). Specifically, the state vector $x_t$ at time (t) is obtained by giving a parameter $\theta$ to a state vector $x_{t-1}$ of one tick prior.

[Equation 8]

$$x_t \sim Q_t\big(\cdot \,|\, x_{t-1},\, \theta\big) \qquad \cdots \qquad (6)$$

Herein, "$\sim$" is an operation for generating a probability variable $x_t$ in accordance with a probability density function $Q_t(\cdot)$ that is dependent on the time (t), where $x_{t-1}$ and $\theta$ are the parameters.

An observation vector $y_t$ is also given by the following Equation (7). Herein, $R_t(\cdot)$ is a probability density function that is dependent on the time (t), where $x_{t-1}$ and $\theta$ are the parameters.

[Equation 9]

$$y_t \sim R_t\big(\cdot \,|\, x_t,\, \theta\big) \qquad \cdots \qquad (7)$$

In the particle filter method the probability density function of the state vector $x_t$ is represented by the following Equation (8), as a conditional probability density function CPDF determined by the observation vectors $\{y_1, y_2, \cdots, y_t\}$.

[Equation 10]

$$CPDF = p\big(x_t \,|\, y_1, y_2, \cdots, y_t\big) \qquad \cdots \qquad (8)$$

Herein, when there is an assumed number N (N is a positive integer) of particles (state vectors) in the particle filter method, then the conditional probability density function (PDF) of the N state vectors is represented by the following Equation (9).

[Equation 11]

$$\left( \begin{array}{c} \text{Conditional probability density function} \\ \text{(PDF) of N state vectors} \end{array} \right) = \sum_{j=1}^{N} \delta\big( x_1 - x_{1|k}^{(j)} \big)$$

$$\cdots \qquad (9)$$

Herein, x is a state vector at a time 1 estimated from an observation vector at a time k at the j-th ($1 \leq j \leq N$) particle.

In the particle filter method, first an initial value at t=0 is given for the conditional probability density function (PDF) of the N particles (step S1 of FIG. 1). The initial value is represented by the following Equation (10).

[Equation 12]

$$\begin{pmatrix} \text{Conditional probability density function} \\ \text{(PDF) of N state vectors} \end{pmatrix} = \sum_{j=1}^{N} \delta\left(\mathrm{x}_0 - \mathrm{x}_{0|0}^{(j)}\right)$$

$$\cdots \quad (10)$$

Then, at the start of the calculation using the particle filter method, the time (t) is set to t=1.

Next, the Equation (6) is used to generate, for the N particles, a probability density function (PDF) of the predicted particles at time (t) on the basis of the probability density function at time (t-1) (step S2 of FIG. 1). The state vector of the particle is represented by the following Equation (11).

[Equation 13]

$$\mathrm{x}_{t|t-1}^{(j)} \sim q_t\left(\cdot \mid x_{t-1|t-1}^{(j)}, \theta\right) \quad (i = j, \cdots, N) \qquad \cdots \quad (11)$$

Herein, $q_t(\cdot)$ is the probability density function defined by the Equation (9).

A weight coefficient Wj (the following Equation (12)) of each particle is then calculated by a likelihood Lj (the following Equation (13)). The likelihood Lj is obtained from the Equation (7). In other words, herein, the degree of conformance between the observation vector $y_t$ obtained from the actual time-series data and the state vector $x_t$ obtained by calculation is evaluated (step S3 of FIG. 1). The degree of conformance can be evaluated by using a likelihood.

[Equation 14]

$$\mathrm{wj} = \frac{Lj}{\sum\limits_{j=1}^{N} Lj} \qquad \cdots \quad (12)$$

[Equation 15]

$$\mathrm{Lj} = p\left(y_t \mid x_{t|t-1}^{(j)}\right) \qquad \cdots \quad (13)$$

Thereafter, the particles are resampled in accordance with the weight coefficient of each particle (step S4 of FIG. 1). Specifically, only a number, which is in accordance with the weight coefficient, of each particle indicated by the Equation (11) is sampled, and the total number N of particles is sampled. At this time, because the weight coefficient is smaller when the degree of conformance is small, there is a high probability that those particles will not remain. On the other hand, the weight coefficient is larger when the degree of conformance is greater, and those particles are replicated and increased. The above is an overview of the particle filter method.

Next, the sequence above is performed repeatedly, with the time (t) advancing by one at each step, until the final step (t = $t_{end}$) (steps S5 and S6 of FIG. 1). The sequential particle filter method can thereby be applied in accordance with the advance of time.

The following is a description of the sequence in which the particle filter method is used for the PUCK model in this embodiment. This embodiment is characterized in dealing with the PUCK model when generating the probability density function in step S2 of FIG. 1. The description below is of a specific example at step S2. Below, a state vector is used to represent the potential coefficient in each order at time (t) by $b_i(t)$, to represent the number of most recent data by M(t), and the like. The potential coefficient $b_i(t)$ in each order at time (t-1) is represented by the following Equation (14), and the number of most recent data M(t-1) is represented by the following Equation (15), where $\theta_b$ and $\theta_M$ are parameters for generating noise.

[Equation 16]

$$b_i(t-1) \sim Q_b(\cdot \,|\, b_i(t-2),\, \theta_b) \qquad \cdots \qquad (14)$$

[Equation 17]

$$M(t-1) \sim Q_M(\cdot \,|\, M(t-2),\, \theta_M) \qquad \cdots \qquad (15)$$

By applying the Equation (15) to the previous Equation (3), the following Equation (16) can be obtained.
[Equation 18]

$$P_M(t-1) = \frac{1}{M(t-1)} \sum_{j=0}^{M(t-1)-1} P(t-1-j) \qquad \cdots \qquad (16)$$

By applying the Equations (14) and (15) to the previous Equation (2), the following Equation (17) can be obtained.
[Equation 19]

$$P(t) = P(t-1) - \sum_{i=1}^{K} \left( \frac{b_i(t-1)(P(t-1) - P_M(t-1))}{M(t-1)-1} \right)^{i-1} + f_P(t) \qquad \cdots \qquad (17)$$

In such a case as well, similar to the previous Equation (1), the Equation (18) holds true.
[Equation 20]

$$Y(t) = P(t) + f_Y(t) \qquad \cdots \qquad (18)$$

The observation error $f_P(t)$ of the true market price at the time (t) and the observation error $f_Y(t)$ of the market price at time (t) follow the normal distribution and the like, as in the following Equation (19).
[Equation 21]

$$f_P(t) \sim N(0, \sigma_P{}^2), \; f_Y(t) \sim N(0, \sigma_Y{}^2) \qquad \cdots \qquad (19)$$

Below, in general, the portion of N(·) may be not only the normal distribution but also the probability distribution, which is further characterized by a higher-order moment or the like. Further, $f_P(t)$ and $f_y(t)$ may be different probability distributions.
A standard deviation $\sigma_P$ of the observation error $f_P(t)$ of the true market price at time (t) can be represented by the following Equation (20), using a state vector.
[Equation 22]

$$\sigma_{P,t} \sim Q_P(\cdot \,|\, \sigma_{P,t-1},\, \theta_P) \qquad \cdots \qquad (20)$$

A standard deviation $\sigma_Y$ of the observation error $f_Y(t)$ of the market price at time (t) can be represented by the following Equation (21), using a state vector.
[Equation 23]

$$\sigma_{Y,t} \sim Q_Y\left(\cdot \mid \sigma_{Y,t-1}, \theta_Y\right) \qquad \cdots \qquad (21)$$

Using the Equations (20) and (21), the Equation (19) can be substituted with the following Equation (22).
[Equation 24]

$$f_P(t) \sim N\left(0, \sigma_{P,t}^2\right), \ f_Y(t) \sim N\left(0, \sigma_{Y,t}^2\right) \qquad \cdots \qquad (22)$$

Then, consideration is given to the advancement of time of the model described above. Below, a variable A(t) is given by the mean value A(t), the normal distribution of the diffusion dispersion $\sigma_A^2$ or the like. Specifically, the variable A(t) can be expressed by the following Equation (23).
[Equation 25]

$$A(t) \sim N\left(A(t-1), \sigma_A^2\right) \qquad \cdots \qquad (23)$$

The variable A(t) is determined by the observation values {y(1), ⋯, y(t-1)} prior to time (t). When the A(t) at this time is denoted by $A_{t|t-1}$, the Equation (23) can be substituted with the Equation (24).
[Equation 26]

$$A_{t|t-1} \sim N\left(A_{t-1|t-1}, \sigma_A^2\right) \qquad \cdots \qquad (24)$$

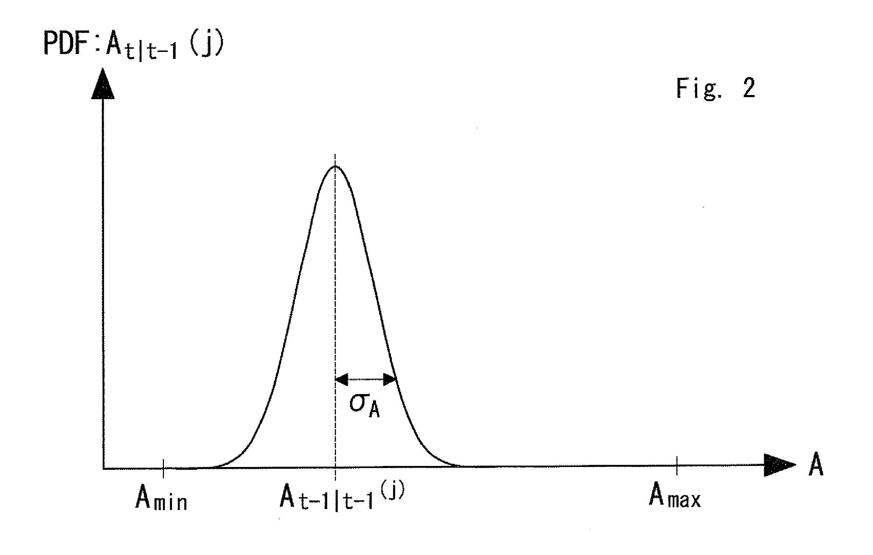

FIG. 2 is a graph illustrating a probability distribution given by the Equation (24). As illustrated in FIG. 2, $A_{t|t-1}$ serves as the normal distribution or the like of the mean value $A_{t-1|t-1}$ and the standard deviation $\sigma_A$, within a range from $A_{min}$ to $A_{max}$.
However, the $A_{t|t-1}$ illustrated in Equation (24) and FIG. 2 has two problems. One lies in that, for example, actual financial markets and the like have steep changes in market prices, but the above-described model based on the random walk is unable to keep track of such steep changes. Also, actual systems have limitations to the range of values that parameters can take. Accordingly, in this embodiment, the variable A(t) is represented by the following Equation (25), as a mixed distribution of a cut normal distribution or the like and a uniform value distribution.
[Equation 27]

$$A(t) \sim (1 - A_{mut})\, truncN\left(A(t-1), \sigma_A^2; A_{min}, A_{max}\right) + A_{mut} U\left(A_{min}, A_{max}\right) \qquad \cdots \qquad (25)$$

{(1-$A_{mut}$)truncN(A(t-1), $\sigma_A^2$; $A_{min}$, $A_{max}$)} of the Equation (25) is a normalized cut normal distribution or the like of the mean value A(t-1), the dispersion $\sigma_A^2$, and the interval ($A_{min}$, $A_{max}$). truncN can be extended to one in which a general distribution characterized by the average and/or standard deviation or the like is cut by an upper limit and a lower limit. $A_{mut}$ is a coefficient that is newly introduced by the Equation (25) in order to support steep changes in market prices or other sudden events. Specifically, A(t) is represented by a form in which the two components of the normal distribution or the like and the uniform distribution U ($A_{min}$, $A_{max}$) are mixed. The mixture rate of the uniform distribution U ($A_{min}$, $A_{max}$) is determined by the value of $A_{mut}$.

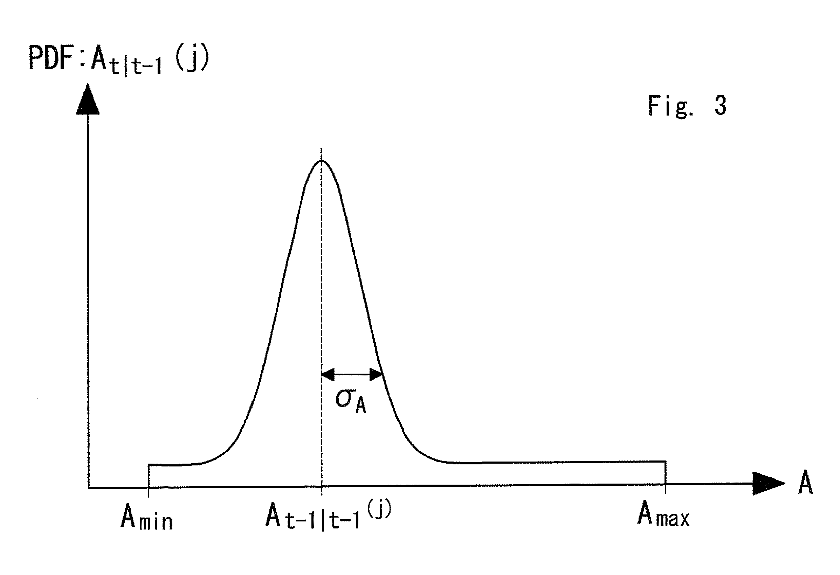

FIG. 3 is a graph illustrating the probability distribution given by the Equation (25). As illustrated in FIG. 3, $A_{t|t-1}$ is expressed as a distribution in which the normal distribution or the like of the mean value $A_{t-1|t-1}$, the standard deviation $\sigma_A$ and a constant value $A_{mut}$ are mixed, within the range from $A_{min}$ to $A_{max}$.

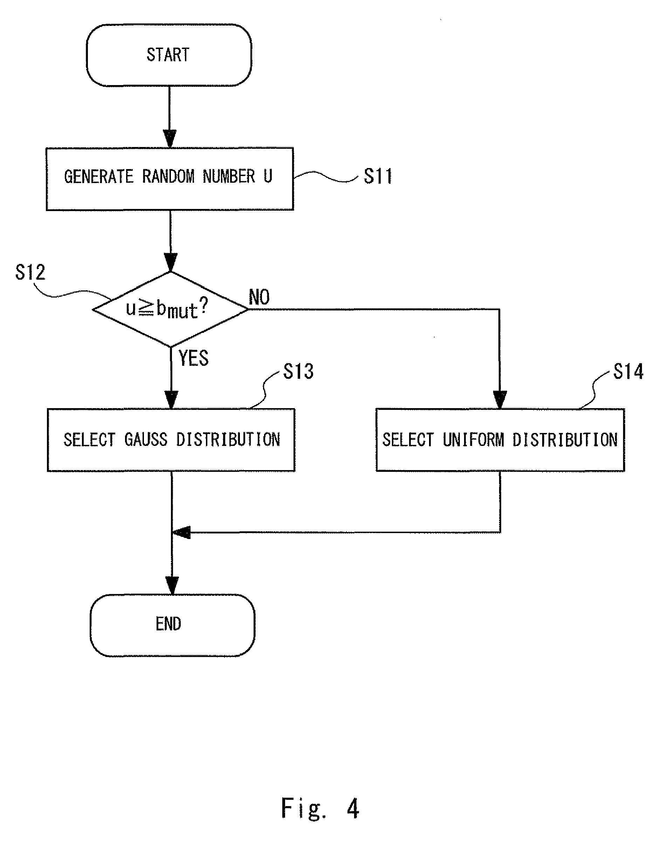

Subsequently, a description will be provided for a specific example for applying the Equation (25) to each parameter of the PUCK model. The processing for applying the Equation (25) to each parameter of the PUCK model is performed in the step S1 described above. FIG. 4 is a flow chart illustrating a method for determining the potential coefficient b(t) at time (t) in the first embodiment. First, a description will be provided for the potential coefficient b(t) at time (t). Herein, the Equation (25) can be substituted with the Equation (26).

[Equation 28]

$$b_i(t) \sim \left(1 - b_{i,mut}\right)N\left(b_i(t-1),\sigma_b{}^2\right) + b_{i,mut}U\left(b_{i,min},b_{i,max}\right) \qquad \cdots \qquad (26)$$

Using the Equation (26) and applying the particle filter method makes it possible to estimate the potential coefficient $b_i(t)$ in each order at time (t). Herein, it is necessary to determine the mixture ratio of the normal distribution or the like and the uniform distribution in the potential coefficient $b_i(t)$ in each order at time (t). Herein, a random number u is generated for such a purpose (step S11 of FIG. 4). The random number u is any real number satisfying $0 \leq u \leq 1$. $b_{mut}$ in the Equation (25) is a coefficient illustrating the proportion at which a sudden event occurs in the advancement of time of the potential coefficient $b_i(t)$ in each order at time (t). In this embodiment the mixture ratio of the normal distribution or the like and the uniform distribution is determined by comparing $b_{i,mut}$ and the random number u (step S12 of FIG. 4). $b_{i,mut}$ is compared with the random number u, which is generated randomly, and so in the end, the mixture ratio converges on $(1-b_{i,mut}):b_{i,mut}$.

That is, when $u \geq b_{i,mut}$, the potential coefficient b(t) at time (t) is established from only the normal distribution or the like (step S 13 of FIG. 4). Accordingly, the potential coefficient $b_i(t)$ in each order at time (t) in such a case is represented by the following Equation (27).

[Equation 29]

$$b^{(j)}_{i,t|t-1} \sim truncN\left(b^{(j)}_{i,t-1|t-1},\sigma_b{}^2,b_{i,min},b_{i,max}\right) \qquad \cdots \qquad (27)$$

On the other hand, when $u < b_{i,mut}$, the potential coefficient $b_i(t)$ in each order at time (t) is established from only the uniform distribution (step S 14 of FIG. 4). Accordingly, the potential coefficient $b_i(t)$ in each order at time (t) in such a case is represented by the following Equation (28).

[Equation 30]

$$b^{(j)}_{i,t|t-1} \sim U\left(b_{i,min},b_{i,max}\right) \qquad \cdots \qquad (28)$$

In this embodiment, as described above, a uniform distribution is introduced in order to give consideration to a sudden event in which there is a steep change to the time-series data. In other words, in case of no uniform distribution, particles with a lower degree of conformity are culled and eliminated each time the particles advance a generation. When a sudden event occurs in such a state, particles that conform to the sudden event will have already been eliminated, and the sudden event cannot be tracked. However, in this embodiment, the introduction of a uniform distribution taking into account a sudden event makes it possible to prevent the elimination of particles with a low degree of conformity. It is thereby possible to retain particles with a high degree of conformity to the sudden event, and to increase the ability to track the sudden event compared to an ordinary particle filter method. In this manner, the introduction of the uniform distribution makes it possible to achieve a specific effect that cannot be achieved when an ordinary normal distribution or Lorentz distribution is used.

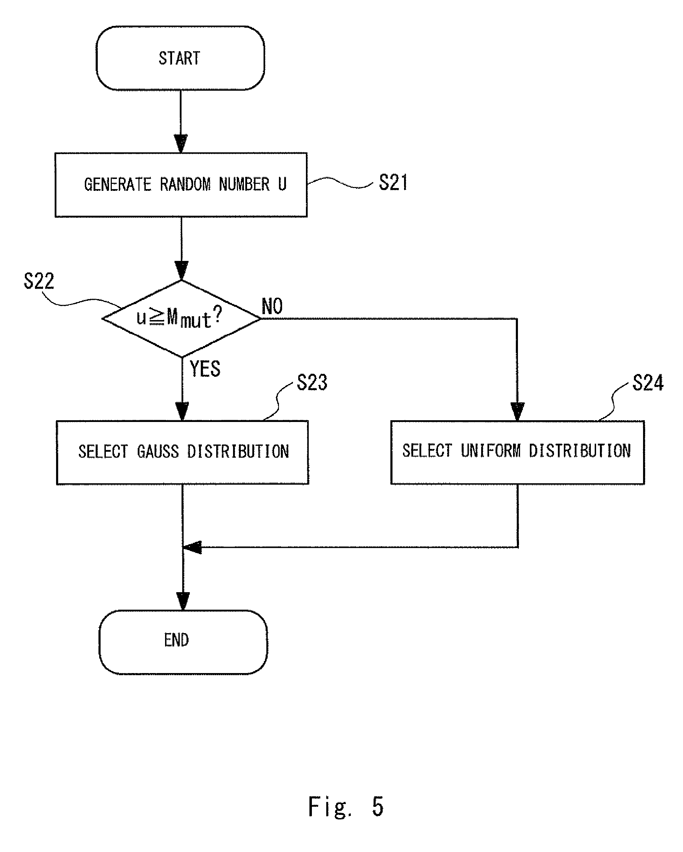

Next, a description will be provided for the number M(t) of most recent data. Similar to the potential coefficient b(t) at time (t), a uniform distribution is also introduced to the number M(t) of most recent data, in order to given consideration to a sudden event. In this embodiment, the number M(t) of most recent data is represented as a mixed distribution of a uniform distribution and a probability density function at time (t-1). The number M(t) of most recent data is processed in the step S1 described above. FIG. 5 is a flow chart illustrating a method for determining the number M(t) of most recent data at time (t) in the first embodiment. In such a case, the number M(t) of most recent data is represented by the Equation (29).
[Equation31]

$$M(t) \sim \left(1 - M_{mut}\right) G\left(M(t) \mid M(t-1), \sigma_M, M_{\max}, M_{\min}\right) + M_{mut} U\left(M_{\min}, M_{\max}\right)$$

$$\cdots \quad (29)$$

Herein, similar to the case of the potential coefficient b(t) at time (t), a random number u is generated (step S21 of FIG. 5) and the random number u is compared with $M_{mut}$ (step S22 of FIG. 5), whereby the mixture ratio of the uniform distribution and the probability density function at time (t-1) is determined.

That is, when $u \geq M_{mut}$, the number M(t) of most recent data is established from only the probability density function at time (t-1) (step S23 of FIG. 5). Accordingly, the number M(t) of most recent data in such a case is represented by the following Equation (30).
[Equation 32]

$$M_{t|t-1}^{(j)}(t) \sim G\left( \mid M_{t-1|t-1}^{(j)}, r, M_{max}, M_{min} \right)$$

$$M_{t|t-1}^{(j)}(t) \sim U\left(M_{min}, M_{max}\right) \qquad \cdots \quad (30)$$

where $U(M_{min}, M_{max})$ is a uniform probability density function such that the lower limit is an integer value $M_{min}$, and the upper limit is an integer value $M_{max}$.

On the other hand, when $u < M_{mut}$, the number M(t) of most recent data is established only from the uniform distribution (step S24 of FIG. 5). Accordingly, the number M(t) of most recent data is represented by the Equation (31).

The following illustrates a specific example of the expected probability density function G(·). When $M_{min} < M(t-1) < M_{max}$, the probability density function G(·) is represented by the following Equation (31).
[Equation 33]

$$G\left(M(t-1)+1 \mid M(t-1), r, M_{min}, M_{max}\right) = r$$

$$G\left(M(t-1) \mid M(t-1), r, M_{min}, M_{max}\right) = 1 - 2r$$

$$G\left(M(t-1)-1 \mid M(t-1), r, M_{min}, M_{max}\right) = r \qquad \cdots \quad (31)$$

where 0 < r < 1.

In the boundary conditions, the probability density function G(·) is represented by the following Equation (32).
[Equation 34]

$$G\left(M_{max} - 1 \mid M_{max}, r, M_{min}, M_{max}\right) = r$$

$$G\left(M_{max} \mid M_{max}, r, M_{min}, M_{max}\right) = 1 - r$$

$$G\left(M_{min} + 1 \mid M_{min}, r, M_{min}, M_{max}\right) = r$$

$$G\left(M_{min} \mid M_{min}, r, M_{min}, M_{max}\right) = 1 - r \qquad \cdots \quad (32)$$

For M(t-1) outside the range given above, the probability density function G(·) is represented by the following Equation (33).

[Equation 35]

$$G\!\left(\;|\,M(t-1),r,M_{min},M_{max}\right)=0 \qquad \cdots \qquad (33)$$

The standard deviation $\sigma_P(t)$ of the fluctuation error $f_P(t)$ of the Equation (22) (the standard deviation $\sigma_Y(t)$ of the observation error $f_Y(t)$ also has a similar sequence to the below) is given by the following equation.

[Equation 36]

$$\sigma_P(t) \sim (1-\sigma_{Pmut})truncN\!\left(\sigma_P(t-1),\gamma_P{}^2;\sigma_{P\min},\sigma_{P\max}\right)+\sigma_{Pmut}U\!\left(\sigma_{P\min},\sigma_{P\max}\right)$$

$$\cdots \qquad (34)$$

Herein, $\sigma_{pmut}$ is a numerical value between 0 and 1, and $\sigma_{pmin}$ and $\sigma_{pmax}$ represent the upper and lower limits, respectively, of the range that $\sigma_p(t)$ can take. $\gamma_p{}^2$ is a numerical value for representing diffusion.

[Equation 37]

$$\sigma_Y(t) \sim (1-\sigma_{Ymut})truncN\!\left(\sigma_Y(t-1),\gamma_Y{}^2;\sigma_{Y\min},\sigma_{Y\max}\right)+\sigma_{Ymut}U\!\left(\sigma_{Y\min},\sigma_{Y\max}\right)$$

$$\cdots \qquad (35)$$

Herein, $\sigma_{Ymut}$ is a numerical value between 0 and 1, and $\sigma_{Ymin}$ and $\sigma_{Ymax}$ represent the upper and lower limits, respectively, of the range that $\sigma_Y(t)$ can take. $\gamma_Y{}^2$ is a numerical value for representing diffusion.

As has been described above, according to the method for detecting a change-point in time-series data according to this embodiment, when the time-series data are in a stable trend, and the trend can be appropriately tracked by increasing the particles indicating parameters with a high degree of conformity to the stable trend (the potential coefficient b, the number M of most recent data, the standard deviations $\sigma_P$ and $\sigma_Y$).

Furthermore, according to the method for detecting a change-point in time-series data according to this embodiment, a trend can still be tracked even when there is a steep change, i.e., a sudden event deviating from the stable trend. That is, in the case of an ordinary particle filter method, when a stable trend persists, there is an increase only in the particles conforming to the stable trend, and particles that do not conform to the stable trend but rather to a sudden event are culled and eliminated.

However, in the method for detecting a change-point in time-series data according to this embodiment, at the calculation of the probability density function for the parameters at the most recent time, a uniform distribution is assigned at a constant proportion to each of the parameters, as illustrated in the Equations (28) and (30). A uniform distribution is thereby assigned at a constant proportion even to particles that are eliminated due to having a poor degree of conformity to the stable trend, when the probability density function is generated in step S2 of FIG. 1. Particles that conform not to the stable trend but rather to a sudden event can thereby remain even as the sequential computation by the particle filter method proceeds. Then, when a sudden event occurs at a certain point in time, there is an increase in the particles having a higher degree of conformity to the sudden event among the particles that remain, whereby it is possible to appropriately track a dynamic event such as a sudden event.

Then, the sequential calculation of the potential coefficient $b_i(t)$ and the number $M(t)$ of most recent data makes it possible to detect the state of changes in the time-series data. The changes in the time-series data are stable when a secondary potential coefficient $b_2(t)$ has a positive value and the other $b_i(t)$ is in the vicinity of 0. However, when there is an increase in the degree of conformity of particles where the secondary potential coefficient $b_2(t)$ takes a negative value as a result of the sequential analysis, the changes in the time-series data are then in an unstable state. In other words, monitoring the changes in the value of the secondary potential coefficient $b_2(t)$ makes it possible to detect the boundary points of whether the changes in the time-series data is stable or unstable. Further, it is predicted that the sharp downward trend is likely to occur when a third-order potential coefficient $b_3(t)$ has a positive value and the sharp upward trend is likely to occur when $b_3(t)$ has a negative value.

In addition, although the particle filter method expresses the potential coefficient $b_i(t)$ and the number $M(t)$ of most recent data as plural particles, the particles having a high degree of conformity vary in accordance with the advancement of time, and therefore the values of the potential coefficient $b_i(t)$ and the number $M(t)$ of most recent data having a high degree of conformity also vary. Because the number of most recent data having a high degree of conformity is variable, available data can be used to calculate the number M of most recent data having a high degree of conformity even when, for example, there is a small number of accumulated time-series data. In other words, although the ordinary PUCK model requires a certain number of data (on the order of 1,000 points), this method can be used with a smaller number of data. Furthermore, there is no need to calculate data noise-removal processing for the optimal moving average or the like, as was indispensable in the existing technique. Therefore, compared to the existing technique of the PUCK model for estimating the parameters, there is an advantage in that the PUCK model can be applied even at a stage where there is less data accumulated.

Moreover, referencing the value of the potential coefficient $b_i(t)$ and the degree of conformity, i.e., the number of particles makes it possible to analyze the fluctuating environment of the time-series data. Specifically, taking the example of yen/dollar trading, when there is a tendency for particles where the secondary potential coefficient $b_2(t)$ takes a positive value to have a high degree of conformity, the change in pricing is stable, and compared to the random walk, the pricing is more prone to be pulled back in the reverse direction in a short time scale. In such a case, the market is more likely to experience an inversion in the upward or downward pricing trend, and, as a result, less likely to experience a major pricing fluctuation. On the other hand, in a case in which there is a tendency for the particles where the secondary potential coefficient $b_2(t)$ takes a negative value to have a high degree of conformity, the change in pricing is unstable, and compared to the random walk, the pricing change is more likely to persistently occur in the same direction in a short time scale, and there is more likely to be an amplification of the upward or downward trend. In such a case, a trader having a strategy for tracking the trend can be expected to be numerically dominant in the market (Non-patent Document 2). Thus, applying this method to time-series data such as prices in a financial market like currency exchange makes it possible to quantitatively evaluate the characteristics of the collective behavior of traders in the market.

The above-described effect of being able to quantitatively evaluate the characteristics of the collective behavior of traders in the market is an effect specific to the method for detecting a change-point in time-series data according to this embodiment. In the method for detecting a change-point in time-series data according to this embodiment, the potential coefficient $b_i(t)$ at time (t) and the number M of most recent data, which have plural different values, can each be expressed as particles having different degrees of conformity. It is thereby possible to perform plural simultaneous evaluations for the potential coefficient $b_i(t)$ at time (t) and the number $M(t)$ of most recent data, which have different values, presuming that, there being a high degree of conformity at time (t), the changes in time-series data are subject to a dominant effect. It is thereby possible to simultaneously evaluate the behavioral aspects (the potential coefficient $b_i(t)$ at time (t)) and the number of data (number $M(t)$ of most recent data) considered for reference in order to determine the behavior of traders having different behavioral characteristics. By contrast, in the ordinary PUCK model to which the above-described particle filter method has not been applied, it is only possible to hypothesize the number M of most recent data and to calculate the potential coefficient $b_i(t)$ at time (t) for the hypothesized number M of most recent data. Therefore, in principle, it is not possible to simultaneously evaluate the potential coefficient $b_i(t)$ and the number $M(t)$ of most recent data needed in order to estimate the core. In other words, it is not possible to estimate the probability density function and the like of the potential coefficient $b_i(t)$ at time (t), the number $M(t)$ of most recent data, and other parameters of the PUCK model. Specifically, plural simultaneous evaluations of the potential coefficient $b_i(t)$ at time (t) and the number M of most recent data using the PUCK model can be achieved for the first time by the use of the method for detecting a change-point in time series data according to this embodiment.

The method for detecting a change-point in time-series data according to this embodiment can also be provided as a program in which the algorithms for expressing the steps S1 to S6 described above are recited. Executing such a program in a computer or other form of hardware allows for a similar effect as is obtained by the method for detecting a change-point in time-series data according to this embodiment, such as the detection of a change-point in time-series data as described above. For example, it is possible to execute the program, sequentially display the potential coefficients $b_i(t)$ at times (t) or the like on a display device, and observe in real-time the changes over time in the potential coefficient.

Second Embodiment

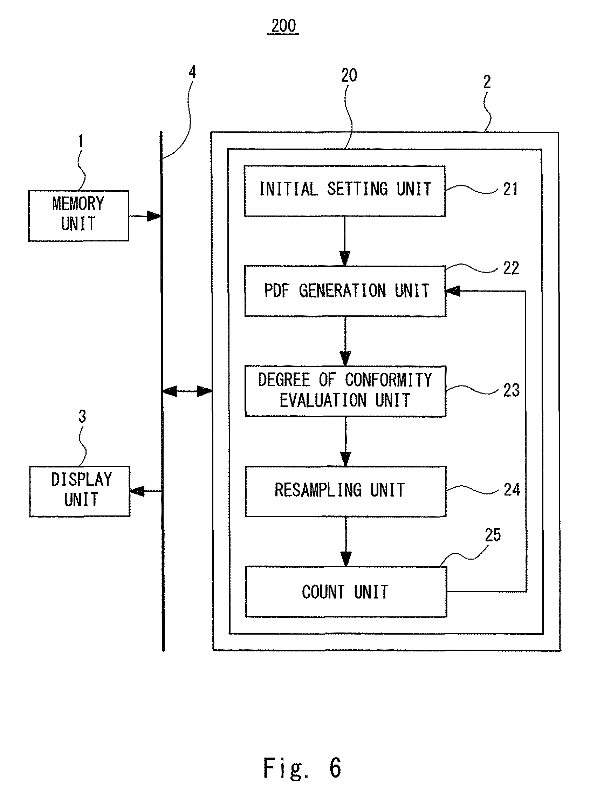

The following is a description of the program for detecting a change-point in time-series data according to the second embodiment. FIG. 6 is a block diagram illustrating a schematic of the configuration of a time-series data change-point detection device 200, in which the program for detecting a change-point in time-series data according to the second embodiment is executed. The time-series data change-point detection device 200 is a device that executes a program in which the algorithms expressing the steps S1 to S6 of the method for detecting a change-point in time-series data according to the first embodiment has been recited. As illustrated in FIG. 6, the time-series data change-point detection device 200 includes a memory unit 1, a computation unit 2, a display unit 3, and a bus 4.

The memory unit 1 is constituted of a hard disk, DRAM, SRAM, flash memory, or other memory device, and stores past time-series data, information on the initial values set in step S1 of FIG. 1, and a program 20 that recites the algorithms for expressing the steps S1 to S6 of the method for detecting a change-point in time-series data according to the first embodiment. The past time-series data, information on the initial values set in step S1 of FIG. 1, and the program 20 stored in the memory unit can be appropriately overwritten from outside. As for the time-series data, new data elements can be sequentially added in accordance with the advancement of time.

A computation unit 2 reads in, from the memory unit 1 via the bus 4, time-series data, the information on the initial values set in step S1 of FIG. 1, and the program 20. The computation unit 2 executes the read-in program 20 and performs a time-series data change-point detection operation. The program 20 includes an initial setting unit 21, a PDF generation unit 22, a degree of conformity evaluation unit 23, a resampling unit 24, and a count unit 25.

Specifically, the initial setting unit 21 performs processing corresponding to step S1 of FIG. 1. That is, first an initial value at t=0 indicated by Equation (10) is given for the conditional probability density function (PDF) of a number N of particles. Then, the time (t) is set to t=1 to start the computation with the particle filter method.

The PDF generation unit 22 performs processing corresponding to the step S2 of FIG. 1. That is, the Equation (6) is used to generate a probability density function (PDF) of the predicted particles at time (t) on the basis of the probability density function (PDF) at time (t-1) for the N number of particles (Equation (11)).

The degree of conformity evaluation unit 23 performs processing corresponding to step S3 of FIG. 1. That is, the weighting coefficient Wi (Equation (12)) of each particle is calculated using a likelihood Li (Equation (13)). The likelihood Li is obtained from the Equation (7). In other words, the degree of conformity between the observation vector $y_t$ obtained from actual time-series data and the state vector $x_t$ obtained from the calculation is evaluated.

The resampling unit 24 performs processing corresponding to step S4 of FIG. 1. That is, the particles are resampled in accordance with the weighting coefficient of each particle. Specifically, only a number, which is in accordance with the weight coefficient, of each particle indicated by the Equation (11) is sampled, and the total number N of particles is sampled. At this time, because the weight coefficient is smaller when the degree of conformance is small, there is a high probability that those particles will not remain. On the other hand, the weight coefficient is larger when the degree of conformance is greater, and those particles replicate and increase.

The computation unit 2 outputs, via the bus 4 to the display unit 3, information on the weighting coefficient obtained by the resampling unit 24 (that is, the number of particles) and the potential coefficient $b_i(t)$ and the number M(t) of most recent data at time (t) represented by each particle.

The count unit 25 performs processing corresponding to steps S5 and S6 of FIG. 1. That is, there is a determination of whether the time of the most recent processing is the final step (t = $t_{end}$) (the processing in Step S5 of FIG. 1). Then, when the time of the most recent processing is not the final step (t = $t_{end}$), the time (t) advances by one step and is brought back to the initial setting unit 21. Loop processing can thereby be implemented using the initial setting unit 21, the PDF generation unit 22, the degree of conformity evaluation unit 23, the resampling unit 24, and the count unit 25. On the other hand, when the time of the most recent processing is the final step (t = $t_{end}$), the processing is terminated, and a processing completion report is outputted to the display unit 3 via the bus 4.

The display unit 3 displays the weighting coefficient outputted from the computation unit 2 (that is, the number of particles), information on the potential coefficient b(t) and the number M(t) of most recent data at time (t) represented by each particle, and the processing completion report, on a liquid crystal display screen for example, in a visible state. At such a time, the potential coefficients b(t) at time (t) and the like are sequentially displayed on the display device, and it is possible to observe in real-time the changes over time in the potential coefficient.

Third Embodiment

A description of a method for predicting a probability density distribution of values of future time-series data according to a third embodiment of the present invention will now be provided. As described in the method for detecting a change-point of time-series data according to the first embodiment, with use of the PUCK model and the particle filter method, the potential coefficient at time (t) can be obtained. Further, with the advancement of time of the PUCK model, values of the future market price can be obtained as a probability density distribution.

The market price (t+1) of the j-th particle at time (t+1) can be represented by the following Equation (36) using the Equation (1).

[Equation 38]

$$P^{(j)}(t+1) = P^{(j)}(t) - \sum_{i=2}^{K} \left\{ b^{(j)}{}_i(t) \left( \frac{P^{(j)}(t) - P_M^{(j)}(t)}{M^{(j)}(t) - 1} \right)^{i-1} \right\} + f^{(j)}{}_P(t)$$

$$\cdots \quad (36)$$

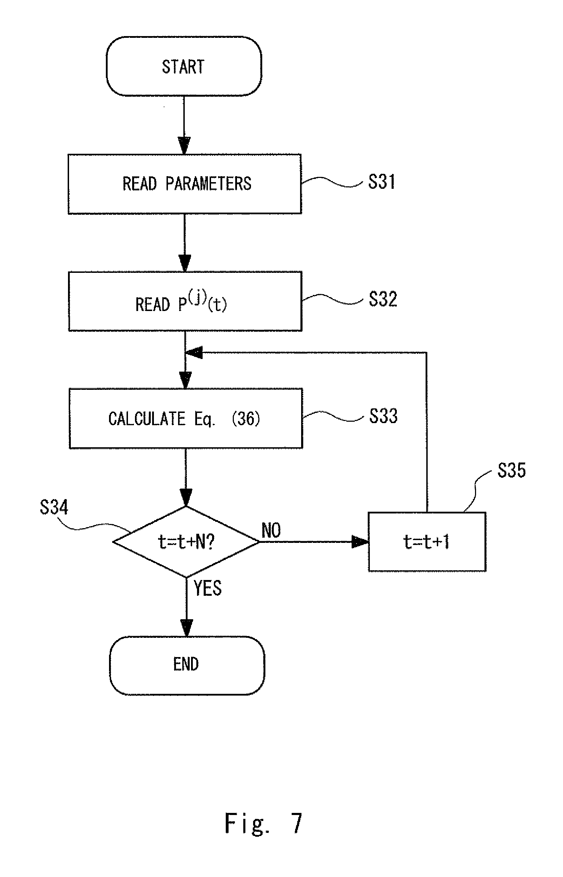

FIG. 7 is a flow chart illustrating a method for the advancement of time of the PUCK model to which the particle filter method is applied according to the third embodiment. First, parameters ($b^{(j)}{}_i(t)$, $M^{(j)}(t)$, $f^{(j)}{}_P(t)$) of the particle at time (t) calculated by the method for detecting a change-point of time-series data according to the first embodiment are prepared (step S31).

Next, the true market price P(t) at time (t) calculated by the method for detecting a change-point of time-series data according to the first embodiment is prepared (step S32).

Using the prepared parameters and the true market price $P^{(j)}(t)$ at time (t), the Equation (36) is calculated.

Then, it is determined whether the time (t) of the most recent processing reaches t=t+N (step S34). When the time of the most recent processing is not the final step (t=t+N), the time (t) advances by one step (step S35) and the calculation of the Equation (36) is performed again. On the other hand, when the time of the most recent processing is the final step (t=t+N), the processing is terminated.

It is thereby possible to advance time to time (t+N) in the Equation (36) using the parameters and the true market price at time (t). With a parameter set (the potential coefficient $b^{(j)}{}_i(t)$, the number of data $M^{(j)}(t)$ needed to estimate the core of the price fluctuation, and a fluctuation error $f^{(j)}{}_P(t)$) of the PUCK model of the j-th particle at time (t) estimated using the particle filter method, the predicted market price at time (t+N) when time advances to time (t+N) in the Equation (36) is represented by the following Equation (37).

[Equation 39]

$$P^{(j)}(t+N) = P^{(j)}(t) - \sum_{n=0}^{N-1}\left\{\sum_{i=2}^{K}\left\{b^{(j)}{}_i(t)\left(\frac{P^{(j)}(t+n) - P_M^{(j)}(t+n)}{M^{(j)}(t)-1}\right)^{i-1}\right\} + f^{(j)}{}_P(t)\right\}$$

$$\cdots \quad (37)$$

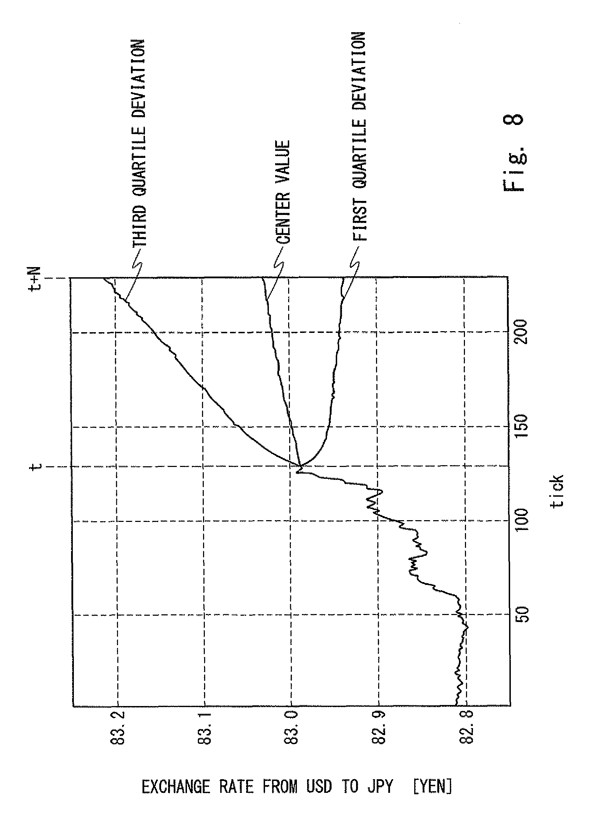

As described above, by applying the Equation (37) to each particle, it is possible to obtain the probability density distribution of the market price $P^{(j)}(t+N)$ at time (t+N). FIG. 8 is a graph illustrating the progression of a probability density distribution when calculating the probability density distribution of the market price at time (t+N) by a method for predicting a probability density distribution of values of future time-series data according to the third embodiment. In FIG. 8, the exchange rate from US Dollar to Japanese Yen is used as an example where N=100.

FIG. 8 shows the first quartile deviation QD1, the center value Vc and the third quartile deviation QD3 for the probability density distribution from time (t) to time (t+N), where K=3 (that is, when the second-order and third-order potential acts) in the Equation (37). In FIG. 8, the calculation is made where N=100.

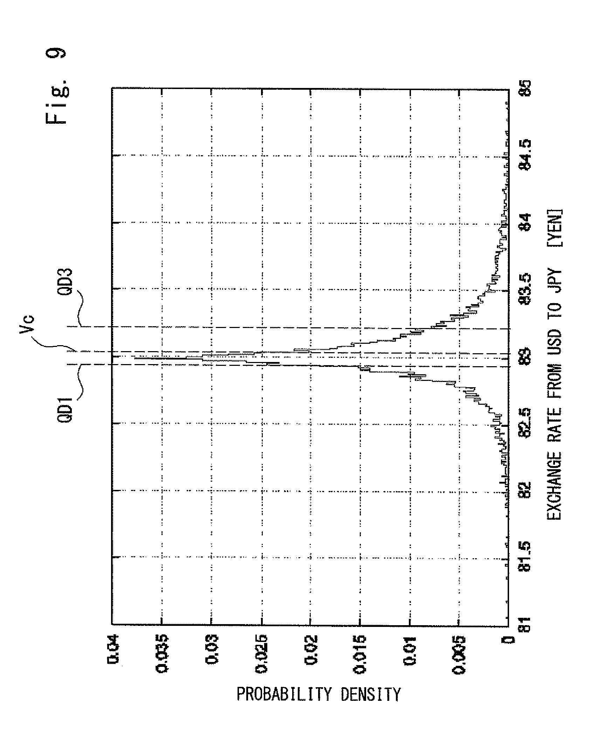

FIG. 9 is a graph illustrating a probability density distribution of values of the market price at time (t+N) by a method for predicting a probability density distribution of values of future time-series data according to the third embodiment. In FIG. 9, as in FIG. 8, the exchange rate from US Dollar to Japanese Yen is used as an example where N=100. As illustrated in FIG. 9, the probability density distribution at time (t+N) is a distribution having a wide spread on the price increase side (the part on the right side of the peak of the distribution curve), thus having a distorted distribution. Accordingly, in the example of FIG. 9, it is understood that the upward trend is stronger for the market price at time (t+N).

As described above, in the method for predicting the probability density distribution of values of future time-series data according to this embodiment, it is possible to reflect the influence of a nonlinear behavior of a price fluctuation by introduction of the third- and higher-order potential. It is thus possible to generate the left-right asymmetrical distorted probability density distribution as illustrated in FIG. 9 in the prediction of the future market price. This is the effect that can be achieved first by this embodiment, which cannot be achieved by the technique of using a left-right symmetrical distribution such as a normal distribution used in general risk evaluations. It is therefore possible to suitably predict the left-right asymmetrical distorted probability density distribution that occurs in the real financial markets and provide the method for predicting the probability density distribution of more practical values of time-series data.

As described above, in the method for predicting the probability density distribution of values of future time-series data according to this embodiment, it is possible to obtain the probability density distribution of values of the future market price on the basis of the parameter set of the PUCK model at time (t) estimated using the particle filter method. Further, because the third- and higher-order potential can be introduced when k≥3 in the Equation (37), prediction including a nonlinear behavior of a market price fluctuation can be made. It is thus possible to predict the market price that more accurately reflects the real market conditions.

By applying the method for predicting the probability density distribution of values of future time-series data according to this embodiment to price prediction for currency and stock exchange and the like, it is possible to estimate the risk of price fluctuations on currency and stock exchange with higher accuracy than before. The method can be thereby used in design and development of financial products such as options where the risk is estimated more appropriately compared to the prior art methods.

Fourth Embodiment

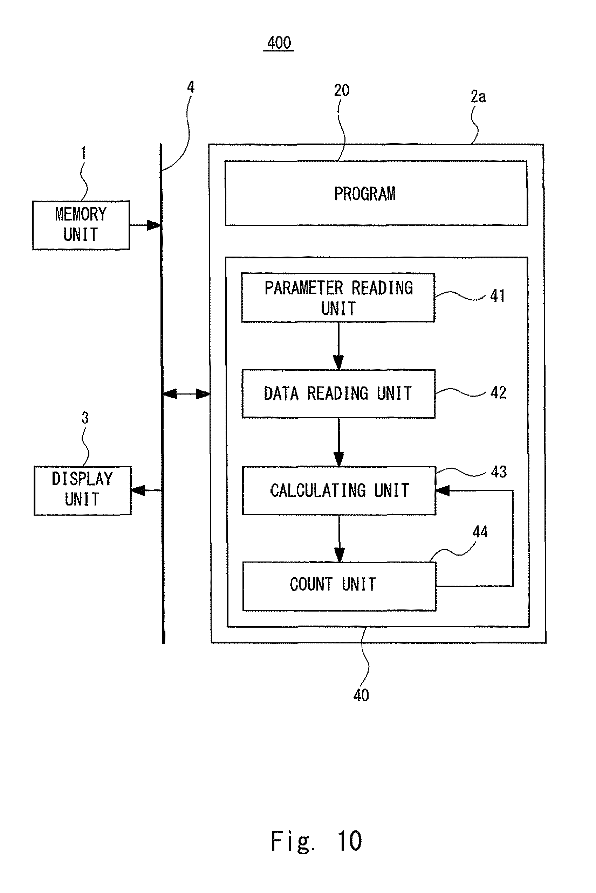

A description of the program for predicting a probability density distribution of values of future time-series data according to a fourth embodiment of the present invention will now be provided. FIG. 10 is a block diagram illustrating a schematic view of the configuration of a prediction device 400 for predicting the probability density distribution of values of future time-series data, in which the program for predicting the probability density distribution of values of future time-series data according to the fourth embodiment is executed. The prediction device 400 for predicting the probability density distribution of values of future time-series data is a device that executes a program in which the algorithms representing the steps S31 to S35 of the method for predicting the probability density distribution of values of future time-series data according to the third embodiment are described. As illustrated in FIG. 10, the prediction device 400 for predicting the probability density distribution of values of future time-series data includes a memory unit 1, a computation unit 2a, a display unit 3 and a bus 4. The memory unit 1, the display unit 3 and the bus 4 are the same as those of the second embodiment and thus not redundantly described.

The computation unit 2a reads in, from the memory unit 1 via the bus 4, the parameters and time-series data calculated by the program 20, and the program 40. The computation unit 2 executes the read-in program 40 and performs prediction of the probability density distribution of values of future time-series data. The program 40 includes a parameter reading unit 41, a data reading unit 42, a calculating unit 43 and a count unit 44.

Specifically, the parameter reading unit 41 reads in the parameters $(b^{(j)}_i(t), M^{(j)}(t), f^{(j)}_P(t))$ of the j-th particle at time (t) calculated by the program 20. In other words, the parameter reading unit 41 performs processing corresponding to the step S31 of FIG. 7. Note that the parameters of the particle at time (t) calculated by the program 20 is stored in the memory unit 1, for example, and read by the parameter reading unit 41 according to need.

The data reading unit 42 reads in the true market price $P^{(j)}(t)$ at time (t) calculated by the program 20. In other words, the data reading unit 42 performs processing corresponding to the step S32 of FIG. 7. Note that the true market price $P^{(j)}(t)$ at time (t) calculated by the program 20 is stored in the memory unit 1, for example, and read by the data reading unit 42 according to need.

The calculating unit 43 performs processing corresponding to the step S33 of FIG. 7. Specifically, the calculating unit 43 calculates the market price after one tick from the set time using the Equation (36).

The count unit 44 performs processing corresponding to the steps S34 and S35 of FIG. 7. Specifically, the count unit 44 determines whether the time of the most recent processing is the final step (t=t+N) (the processing in the step S34 of FIG. 7). When the time of the most recent processing is not the final step (t=t+N), the time (t) advances by one step, and the processing returns to the calculating unit 43. The calculation of the Equation (36) is thereby repeated and, when it reaches the time (t+N), the same calculation as represented by the Equation (37) can be obtained. On the other hand, when the time of the most recent processing is the final step (t=t+N), the processing is terminated, and the probability density distribution of the market price at time (t+N) is output to the display unit 3 based on the calculation result.

The display unit 3 displays the probability density distribution of the market price at time (t+N) output from the computation unit 2, on a liquid crystal display screen for example, in a visible state. At such a time, the probability density function of the market price from time (t) to time (t+N) may be sequentially displayed on the display device.

As described above, according to this embodiment, the predication program and the prediction device for predicting the probability density distribution of values of future time-series data according to the fourth embodiment can be implemented in a specific manner.

Fifth Embodiment

A description of another method for predicting a probability density distribution of values of future time-series data according to a fifth embodiment of the present invention will now be provided. In the third embodiment, it is described that values of the future market price can be obtained as the probability density distribution by the advancement of time of the PUCK model. Specifically, the advancement of time is performed using the potential coefficient b(t) at time (t), which is the starting point of the time advancement. Note that, in this embodiment, the order i of the potential and the number j of the particle are not illustrated.

In the third embodiment, the future is predicted on the assumption that the value of the potential coefficient b(t) at time (t) is the same during the period of the future time (t+1) to (t+N). Accordingly, in the third embodiment, it is only possible to predict the changes over time of short-term price fluctuations. On the other hand, if an equation for the time advancement of the potential coefficient b(t) can be obtained as described in this embodiment, the changes of the potential coefficient b(t) from the future time (t+1) to (t+N) can be predicted. This enables the obtainment of the more accurate price distribution at future time (t+N). It is therefore important to estimate an equation for the time advancement of the potential coefficient b(t) when predicting the changes over time of long-term price fluctuations. For example, the relationship of the potential coefficient b(t+1) at time (t+1) with the potential coefficient b(t) at time (t) is defined by the following Equation (38).
[Equation 40]

$$b(t+1) - b(t) = -\frac{\partial}{\partial b}G(b)\Big|_{b=b(t)} + f_b(t) \qquad \cdots \qquad (38)$$

where the function G(b) in the first term (partial differential term) on the right hand side is a function that describes the time advancement of the potential coefficient to time (t), and $f_b(t)$ is a noise term.

When the first term (partial differential term) on the right hand side excluding the symbol "-" is a potential $\lambda$ acting on the changes over time of the potential coefficient, the Equation (38) can be transformed into the Equation (39).
[Equation 41]

$$b(t+1) - b(t) = -\lambda b(t) + f_b(t) \qquad \cdots \qquad (39)$$

From the Equation (39), the potential coefficient b(t+1) at time (t+1) is represented by the following Equation (40).
[Equation 42]

$$b(t+1) = (1 - \lambda)b(t) + f_b(t) \qquad \cdots \qquad (40)$$

As represented in the Equation (40), the coefficient $(1-\lambda)$ acts on and the noise term $f_b(t)$ is added to the potential coefficient b(t+1) at time (t+1).

Prediction of the market price distribution in the case where the secondary potential is acting, for example, is described using the potential coefficient represented by the Equation (40). Fluctuations of the true market price during one tick when the secondary potential is acting can be represented by the following Equation (41) based on the Equations (2), (4) and (5).
[Equation 43]

$$P(t+1) - P(t) = -\left(\frac{b(t)}{(M-1)}(P(t) - P_M(t))\right) + f_P(t) \qquad \cdots \qquad (41)$$

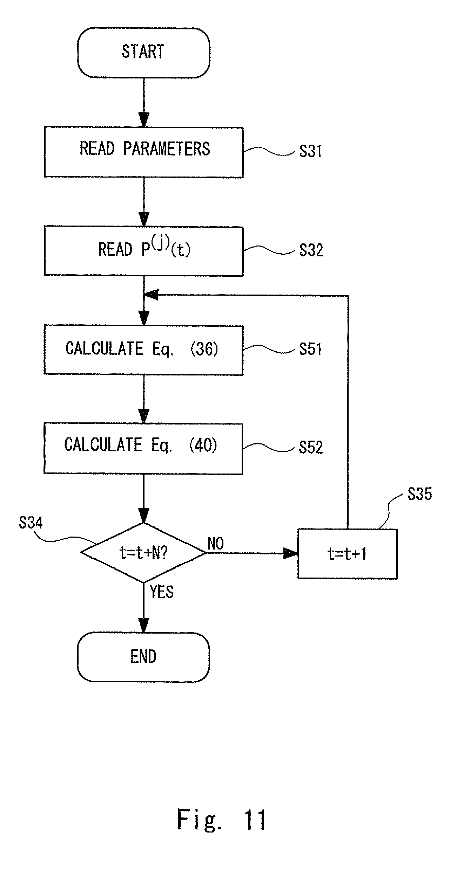

FIG. 11 is a flow chart illustrating a method for the advancement of time of a PUCK model to which the particle filter method is applied according to the fifth embodiment. In FIG. 11, compared to FIG. 7, the step S33 is replaced by the step S52. Further, the step S51 is added between the steps S32 and S35 and the step S52.

In the step S51, the potential coefficient b(t+1) is calculated using the Equation (40). Next, in the step S52, the Equation (41) is calculated using the prepared parameters and the true market price $P^{(j)}(t)$ at time (t). The other steps are the same as those of FIG. 7 and not redundantly described.

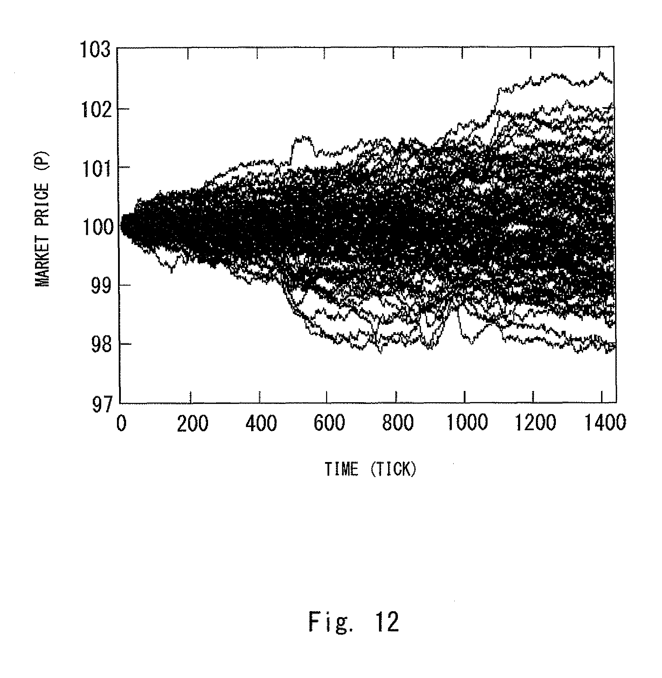

FIG. 12 is a graph illustrating the progression of the market price for each particle as a result of substituting the current market price into a mathematical model and advancing time by each particle number j. In this example, the distribution of the market price up until 1450 ticks from the present is predicted where the starting price is 100. As illustrated in FIG. 12, according to this embodiment, changes of the potential coefficient in the future can be also predicted by the time advancement of the potential coefficient, and it is thereby possible to accurately predict the long-term trend of the market price.

Because prediction of the long-term trend is given as the price market distribution, it is possible to estimate the risk of price fluctuations at a certain point in the future. Therefore, according to this embodiment, it is possible to estimate the risk of price fluctuations on currency and stock exchange with higher accuracy than the third embodiment. The method can be thereby used in design and development of financial products such as options where the risk is estimated more appropriately. Further, it is possible to improve an index of risk management such as Value at Risk used by many financial institutions to measure the risk of their assets.

Note that the advancement of time of the potential coefficient described in this embodiment is given by way of illustration only. Accordingly, the advancement of time of the potential coefficient is not limited to the example represented by the Equation (40).

Sixth Embodiment

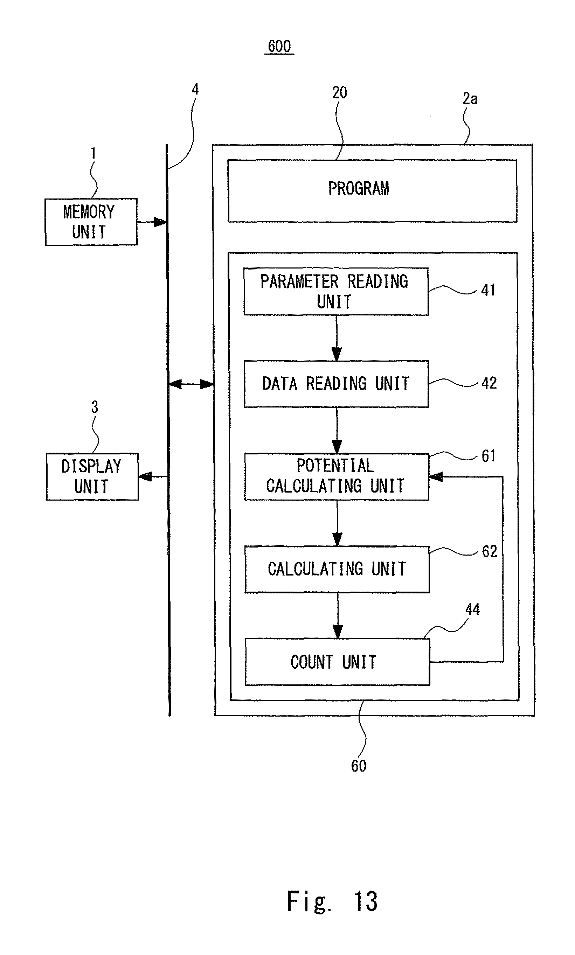

A description of the program for predicting a probability density distribution of values of future time-series data according to a sixth embodiment of the present invention will now be provided. FIG. 13 is a block diagram illustrating a schematic view of the configuration of a prediction device 600 for predicting a probability density distribution of values of future time-series data in which a program for predicting a probability density distribution of values of future time-series data according to the sixth embodiment is executed. The prediction device 600 for predicting the probability density distribution of values of future time-series data is a device that executes a program in which the algorithms representing the steps S31, S32, S51, S52, S34 and S35 of the method for predicting the probability density distribution of values of future time-series data according to the fifth embodiment are described. The prediction device 600 for predicting the probability density distribution of values of future time-series data is a modified example of the prediction device 400 for predicting the probability density distribution of values of future time-series data. As illustrated in FIG. 13, the prediction device 600 for predicting the probability density distribution of values of future time-series data has a configuration in which the program 40 of FIG. 10 is replaced by the program 60.

The program 60 has a configuration in which the calculating unit 43 of the program 40 is replaced by a calculating unit 62, and further a potential calculating unit 61 is added. The potential calculating unit 61 performs processing corresponding to the step S51 in FIG. 11. Specifically, it calculates the potential coefficient using the Equation (40). The calculating unit 62 performs processing corresponding to the step S52 in FIG. 10. Specifically, it calculates the market price after one tick from the set time using the Equation (41). The other configuration of the prediction device 600 for predicting the probability density distribution of values of future time-series data is the same as that of the prediction device 400 for predicting the probability density distribution of values of future time-series data and not redundantly described.

As described above, according to this embodiment, the predication program and the prediction device for predicting the probability density distribution of values of future time-series data according to the fifth embodiment can be implemented in a specific manner.

The present invention is not to be limited to the above embodiments, and can be variously modified within a scope that does not depart from the gist thereof. For example, the present invention can be applied to time-series data involving the fluctuations arising from devices in the process of manufacturing semiconductors, whereby it is possible to measure in real-time whether the treatment process is proceeding stably, and to rapidly detect abnormalities when for any reason instability occurs. In such a case, for example, the market prices can be substituted with the management and measurement data outputted by a device, and a similar analysis can be performed.

In the embodiment described above, as illustrated in the Equation (4), the potential coefficient b(t) at time (t) is described as a coefficient of a secondary and higher-order potential W(q, t). For example, actual financial markets or the like are known to have even more sudden changes in trends that cannot be expressed by a secondary potential. Therefore, the potential U(q, t) at time (t) is not limited to being secondary, but rather can be introduced in the form of a function including a higher-order potential term, and the coefficient of the higher-order potential term can be estimated to follow the sudden changes in trends. In particular, the introduction of a tertiary potential makes it possible to track a boom or collapse in a financial market more rapidly than with a secondary potential. It is also possible to further analyze the directionality of such a boom (that is, upward trend) or collapse (that is, downward trend).

Also, estimating a simultaneous potential distribution or the like of b(t) and M(t) at time (t) using the secondary potential model makes it possible to estimate a different dealer strategy for plural time scales (a multi-scale PUCK model). Further, estimating a third- and higher-order potential coefficient allows for the visualization of strategies for dealers following trends and of collective behavior causing one-sided fluctuations in pricing (the prospect of a multi-scale PUCK model including a higher-order potential).

This application is based upon and claims the benefit of priority from Japanese patent application No. 2011-196512 filed on September 8, 2011 and Japanese patent application No. 2012-50819 filed on March 7, 2012, the disclosure of which is incorporated herein in its entirety by reference.

**Industrial Applicability**

The present invention is applicable to analysis or prediction of fluctuations over time in the market price in exchange markets and stock markets, or analysis or prediction of fluctuations over time in other time-series data such as management or measurement data.

**Reference Signs List**

| | |
|---|---|
| 1 | STORAGE UNIT |
| 2 | COMPUTATION UNIT |
| 3 | DISPLAY UNIT |
| 4 | BUS |
| 20, 40, 60 | PROGRAM |
| 21 | INITIAL SETTING UNIT |
| 22 | PDF GENERATION UNIT |
| 23 | DEGREE OF CONFORMITY EVALUATION UNI |
| 24 | RESAMPLING UNIT |
| 25 | COUNT UNIT |
| 41 | PARAMETER READING UNIT |
| 42 | DATA READING UNIT |
| 43, 62 | CALCULATING UNIT |
| 44 | COUNT UNIT |
| 61 | POTENTIAL CALCULATING UNIT |
| 200 | TIME-SERIES DATA CHANGE-POINT DETECTION DEVICE |
| 400, 600 | PREDICTION DEVICE FOR PREDICTING PROBABILITY DENSITY DISTRIBUTION OF VALUES OF FUTURE TIME-SERIES DATA |
| S1-S6, S11-S14, S21-S24, S41-S45, S51, S52 | STEP |

**Claims**

1. A method for detecting a change-point in time-series data, applying a particle filter method to a PUCK model for calculating a true market price P(t) at a time (t) by the sum of a potential term and fluctuation error defined by the true market price at a time (t-1) and a core price, which is the moving average of a number M (where M is a positive integer) of true market prices until the time (t-1), comprising:

   a first step for obtaining a probability density function for parameters of a later time than a group of particles having parameters representing the state of the PUCK model each having different values;
   a second step for evaluating the degree of conformity of the true market price at the time (t) relative to the market price observed at the time (t) for each of a plurality of particles; and
   a third step for resampling particles from the plurality of particles in accordance with the degree of conformity, wherein:

      in the third step,
      a random number is generated, and
      the random number is compared with a first predetermined value, wherein
      a probability density function comprising a probability density distribution where the parameters representing the state of the PUCK model at the time (t) are average values is generated as particles when the random number is greater than the first predetermined value, and
      a probability density function comprising a uniform distribution is generated as particles when the random number is less than the first predetermined value.

2. The method for detecting a change-point in time-series data according to Claim 1, wherein:

   the probability density distribution where the parameters representing the state of the PUCK model at the time (t) are average values is a normal distribution where the parameters representing the state of the PUCK model at the time (t) are average values.

3. The method for detecting a change-point in time-series data according to Claim 1 or 2, wherein:

in the first step, the PUCK model parameters of a later time than the group of particles having parameters representing the state of the PUCK model are updated.

4. The method for detecting a change-point in time-series data according to any one of Claims 1 to 3, wherein:

in the third step,
a random number is generated for each of the particles, and
the random number is compared with the first predetermined value, where
a conditional probability density function for assuming M at the time (t) is generated as particles when the random number is greater than the first predetermined value, and
a probability density function comprising a uniform distribution is generated as particles when the random number is less than the first predetermined value.

5. The method for detecting a change-point in time-series data according to any one of Claims 1 to 4, wherein:

the true market price at the time (t+1) is calculated by adding the potential term and a fluctuation error of the true market price at the time (t).

6. The method for detecting a change-point in time-series data according to any of Claims 1 to 5, wherein:

the market price observed at the time (t) is the sum of the true market price at the time (t) and the observation error of the market price at the time (t).

7. The method for detecting a change-point in time-series data according to Claim 5 or 6, wherein:

the fluctuation error of the true market price at the time (t) and the observation error of the market price at the time (t) are given by a probability density function in accordance with a normal distribution.

8. A method for predicting a probability density distribution of future time-series data values, comprising:

calculating a true market price P(t) at the time (t) at a time (t+N) by time advancement of the true market price P(t) at the time (t) based on a potential coefficient of the potential term at the time (t) calculated by the method for detecting a change-point in time-series data according to one of Claims 1 to 7, the value of M and a fluctuation error of the true market price at the time (t).

9. The method for predicting a probability density distribution of future time-series data values according to Claim 8, wherein
when a total number of particles is Np,
a number specifying the particle is j (where j is an integer satisfying $1 \leq j \leq Np$),
a potential coefficient of the particle with the number j at the time (t) is $b^{(j)}_i(t)$ (where i is an integer of 2 or more indicating an order of a potential),
a fluctuation error of the true market price of the particle with the number j at the time (t) is $f^{(j)}_P(t)$,
the true market price of the particle with the number j at the time (t) is $P^{(j)}(t)$,
the true market price of the particle with the number j at the time (t+N) is $P^{(j)}(t+N)$,
a core price of the market price of the particle with the number j at the time (t) is $P^{(j)}_M(t)$, and
the value of M at the time (t) is M(t),
the true market price $P^{(j)}(t+N)$ of the particle with the number j at the time (t+N) is represented by Expression:

$$P^{(j)}(t+N) = P^{(j)}(t) - \sum_{n=0}^{N-1}\left\{ \sum_{i=2}^{K}\left\{ b^{(j)}_i(t)\left( \frac{P^{(j)}(t+n) - P^{(j)}_M(t+n)}{M^{(j)}(t)-1} \right)^{i-1} \right\} + f^{(j)}_P(t) \right\}$$

where K is an integer of 2 or more.

10. The method for predicting a probability density distribution of future time-series data values according to Claim 9, wherein
a potential coefficient $b^{(j)}_i(t+1)$ of the particle with the number j at a time (t+1) is calculated by advancement of time of the potential coefficient $b^{(j)}_i(t)$ of the particle with the number j at the time (t).

11. A program for detecting a change-point in time series data, in which a computer is used to execute the detection of a change-point in time-series data in which a particle filter method is applied to a PUCK model for calculating a true market price P(t) at a time (t) by the sum of a potential term and fluctuation error defined by the true market price at a time (t-1) and a core price, which is the moving average of a number M (where M is a positive integer) of true market prices until the time (t-1), wherein:

a computer is used to execute
a first processing for obtaining a probability density function of a parameter by generating a group of particles having parameters representing the state of the PUCK model each having different values,
a second processing for evaluating the degree of conformity of the true market price at the time (t) relative to the market price observed at time (t) for each of a plurality of particles in a degree of conformity evaluation unit, and
a third processing for resampling particles from the plurality of particles in accordance with the degree of conformity in a resampling unit,
wherein
processing for regenerating a probability density function comprising a probability density distribution where the parameter representing the state of the PUCK model at the time (t) is a mean value as particles is executed when the random number is greater than the first predetermined value, and
processing for generating particles in accordance with a uniform distribution is executed when the random number is less than the first predetermined value
are executed.

12. The program for detecting a change-point in time series data according to Claim 11, wherein:

the probability density distribution where the parameters representing the state of the PUCK model at the time (t) are average values is a normal distribution where the parameters representing the state of the PUCK model at the time (t) are average values.

13. The program for detecting a change-point in time-series data according to Claim 11 or 12, wherein:

in the third step,
not only are particles sampled more when having a greater degree of conformity, but also feasible particles having a low degree of conformity are also generated at a constant proportion.

14. The program for detecting a change-point in time-series data according to any one of Claims 11 to 13, wherein:

in the first step,
processing for generating a random number,
processing for generating a conditional probability density function assuming a parameter of the PUCK model at the time (t) as particles, and
processing for generating a probability density function comprising a uniform distribution as particles when the random number is less than the first predetermined value
are executed.

15. The program for detecting a change-point in time-series data according to any one of Claims 11 to 14, wherein:

the true market price at the time (t) is calculated by adding the potential term and the fluctuation error of the true market price at the time (t).

16. The method for detecting a change-point in time-series data according to any one of Claims 11 to 15, wherein:

the market price observed at the time (t) is the sum of the true market price at the time (t) and the observation error of the market price at the time (t).

17. The program for detecting a change-point in time-series data according to Claim 15 or 16, wherein:

the fluctuation error of the true market price at the time (t) and the observation error of the market price at the time (t) are given by a probability density function in accordance with a normal distribution.

18. A program for predicting a probability density distribution of future time-series data values, wherein:

a true market price P(t) at the time (t) at a time (t+N) is calculated by time advancement of the true market price P(t) at the time (t) based on a potential coefficient of the potential term at the time (t) calculated by the program for detecting a change-point in time-series data according to one of Claims 11 to 17, the value of M and a fluctuation error of the true market price at the time (t).

19. The program for predicting a probability density distribution of future time-series data values according to Claim 18, wherein
when a total number of particles is Np,
a number specifying the particle is j (where j is an integer satisfying $1 \leq j \leq Np$),
a potential coefficient of the particle with the number j at the time (t) is $b^{(j)}_i(t)$ (where i is an integer of 2 or more indicating an order of a potential),
a fluctuation error of the true market price of the particle with the number j at the time (t) is $f^{(j)}_P(t)$,
the true market price of the particle with the number j at the time (t) is $P^{(j)}(t)$,
the true market price of the particle with the number j at the time (t+N) is $P^{(j)}(t+N)$,
a core price of the market price of the particle with the number j at the time (t) is $P^{(j)}_M(t)$, and
the value of M at the time (t) is M(t),
the true market price $P^{(j)}(t+N)$ of the particle with the number j at the time (t+N) is represented by Expression:

$$P^{(j)}(t+N) = P^{(j)}(t) - \sum_{n=0}^{N-1} \left\{ \sum_{i=2}^{K} \left\{ b^{(j)}_i(t) \left( \frac{P^{(j)}(t+n) - P^{(j)}_M(t+n)}{M^{(j)}(t) - 1} \right)^{i-1} \right\} + f^{(j)}_P(t) \right\}$$

where K is an integer of 2 or more.

20. The program for predicting a probability density distribution of future time-series data values according to Claim 19, wherein
a potential coefficient $b^{(j)}_i(t+1)$ of the particle with the number j at a time (t+1) is calculated by advancement of time of the potential coefficient $b^{(j)}_i(t)$ of the particle with the number j at the time (t).

Fig. 1

Fig. 2

Fig. 3

START

GENERATE RANDOM NUMBER U ～ S11

S12

$u \geqq b_{mut}$? — NO

YES

SELECT GAUSS DISTRIBUTION ～ S13

SELECT UNIFORM DISTRIBUTION ～ S14

END

Fig. 4

START

GENERATE RANDOM NUMBER U ⟶ S21

S22 — $u \geqq M_{mut}$?  NO

YES

S23
SELECT GAUSS DISTRIBUTION

S24
SELECT UNIFORM DISTRIBUTION

END

Fig. 5

<u>200</u>

MEMORY UNIT — 1

DISPLAY UNIT — 3

20

2

INITIAL SETTING UNIT — 21

PDF GENERATION UNIT — 22

DEGREE OF CONFORMITY EVALUATION UNIT — 23

RESAMPLING UNIT — 24

COUNT UNIT — 25

Fig. 6

Fig. 7

Fig. 8

Fig. 9

<u>400</u>

Fig. 10

```
                    ┌─────────────┐
                    │    START    │
                    └─────────────┘
                           │
                           ▼
              ┌────────────────────────┐
              │    READ  PARAMETERS    │ ────⌇ S31
              └────────────────────────┘
                           │
                           ▼
              ┌────────────────────────┐
              │    READ  P⁽ʲ⁾(t)       │ ────⌇ S32
              └────────────────────────┘
                           │
                           ▼
              ┌────────────────────────┐
              │   CALCULATE  Eq.  (36) │ ────⌇ S51
              └────────────────────────┘
                           │
                           ▼
              ┌────────────────────────┐
              │   CALCULATE  Eq.  (40) │ ────⌇ S52
              └────────────────────────┘
                           │                                    ⌇ S35
                           ▼                              ┌───────────┐
       S34 ⌇           ◇         NO                       │           │
                   ◇ t=t+N? ◇ ───────────────────────▶   │   t=t+1   │
                       ◇                                  │           │
                           │ YES                          └───────────┘
                           ▼
                    ┌─────────────┐
                    │     END     │
                    └─────────────┘
```

Fig.  11

Fig. 12

600

```
                                    ┌─────────────────────────────────┐ 2a
                                    │         ┌─────────────┐ 20       │
 4                                  │         │   PROGRAM   │          │
                                    │  ┌──────┴─────────────┴────────┐ │
 ┌──────────┐ 1                     │  │  ┌───────────────────────┐  │ │
 │  MEMORY  │                       │  │  │  PARAMETER READING    │  │ │  41
 │   UNIT   │───────▶               │  │  │        UNIT           │──┼──┤
 └──────────┘                       │  │  └───────────┬───────────┘  │ │
                                    │  │              ▼              │ │
                                    │  │  ┌───────────────────────┐  │ │  42
                          ◀────────▶│  │  │   DATA READING UNIT   │──┼──┤
                                    │  │  └───────────┬───────────┘  │ │
 ┌──────────┐ 3                     │  │              ▼              │ │  61
 │ DISPLAY  │                       │  │  ┌───────────────────────┐◀─┼──┤
 │   UNIT   │◀───────               │  │  │      POTENTIAL        │  │ │
 └──────────┘                       │  │  │  CALCULATING UNIT     │  │ │
                                    │  │  └───────────┬───────────┘  │ │
                                    │  │              ▼              │ │  62
                                    │  │  ┌───────────────────────┐  │ │
                                    │  │  │   CALCULATING UNIT    │──┼──┤
                                    │  │  └───────────┬───────────┘  │ │
                                    │  │              ▼           44 │ │
                                    │  │  ┌───────────────────────┐  │ │
                                    │  │  │      COUNT UNIT       │──┘ │
                                    │  │  └───────────────────────┘    │
                                    │  └──────────────┬───────────────┘ │
                                    └─────────────────┼─────────────────┘
                                                      60
```

Fig. 13

**EP 2 755 182 A1**

<table>
<tr><td colspan="2" align="center"><b>INTERNATIONAL SEARCH REPORT</b></td><td>International application No.<br><br>PCT/JP2012/005697</td></tr>
</table>

A. CLASSIFICATION OF SUBJECT MATTER
*G06Q40/04*(2012.01)i, *G06Q90/00*(2006.01)i

According to International Patent Classification (IPC) or to both national classification and IPC

B. FIELDS SEARCHED

Minimum documentation searched (classification system followed by classification symbols)
G06Q40/04, G06Q90/00

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Misako Takayasu, Econophysics Approaches to Large-Scale Bussiness Data and Financial Crisis, [online], Springer, 2010.06, P.79-98, Internet <URL:http://www.smp.dis.titech.ac.jp/PDF/99.pdf> | 1-20 |
| A | Kenta YAMADA, "Kin'yu Trading no Shin Choryu", Operations Research as a Management Science Research, vol.55, no.9, Communications of the Operations Research Society of Japan, 01 September 2010 (01.09.2010), vol.55, pages 566 to 570 | 1-20 |
| A | JP 2001-092640 A (Sony Corp.), 06 April 2001 (06.04.2001), entire text; all drawings (Family: none) | 1-20 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 September, 2012 (19.09.12) | Date of mailing of the international search report<br>    02 October, 2012 (02.10.12) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/005697 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2002-298064 A  (Sony Corp.), 11 October 2002 (11.10.2002), entire text; all drawings (Family: none) | 1-20 |
| A | JP 2003-216883 A  (Sony Corp.), 31 July 2003 (31.07.2003), entire text; all drawings (Family: none) | 1-20 |

Form PCT/ISA/210 (continuation of second sheet) (July 2009)

**EP 2 755 182 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011196512 A

- JP 2012050819 A

### Non-patent literature cited in the description

- **MISAKO TAKAYASU.** Econophysics Approaches to Large-Scale Business Data and Financial Crisis. *Springer Japan,* June 2010, 79-98
- **KENTA YAMADA ; HIDEKI TAKAYASU ; TAKA-TOSHI ITO ; MISAKO TAKAYASU.** Solvable Stochastic Dealer Model for Financial Markets. *Physical Review E,* 2009, vol. 79 (5), 051120

- **KAZUYUKI NAKAMURA ; TOMOYUKI HIGUCHI.** Recent Advances and Applications of Bayesian Theory [II]: Sequential Bayesian Estimation and Data Assimilation. *The Journal of the Institute of Electronics, Information, and Communication Engineers,* 2009, vol. 92 (12), 1062-1067